(19) **Europäisches Patentamt · European Patent Office · Office européen des brevets**

(11) **EP 1 882 207 B1**

(12) **FASCICULE DE BREVET EUROPEEN**

(45) Date de publication et mention
de la délivrance du brevet:
**06.07.2016 Bulletin 2016/27**

(21) Numéro de dépôt: **06743782.2**

(22) Date de dépôt: **10.05.2006**

(51) Int Cl.:
***G02C 13/00*** *(2006.01)*

(86) Numéro de dépôt international:
**PCT/FR2006/001036**

(87) Numéro de publication internationale:
**WO 2006/123033 (23.11.2006 Gazette 2006/47)**

(54) **METHODE D'ACQUISITION DE CARACTERISTIQUES GEOMETRIQUES D'UNE DEUXIEME LENTILLE AU MOYEN D'UN PALPAGE D'UNE PREMIERE LENTILLE, LES DEUX LENTILLES APPARTENANT A UN MEME JOB**

**VERFAHREN ZUM AUFZEICHNEN VON GEOMETRISCHEN KENNGRÖSSEN EINER ZWEITEN LINSE MITTELS ABTASTEN EINER ERSTEN LINSE, WOBEI BEIDE LINSEN AUS DERSELBEN CHARGE STAMMEN**

**METHOD FOR RECORDING GEOMETRICAL CHARACTERISTICS OF A SECOND LENS BY MEANS OF SCANNING A FIRST LENS BOTH LENSES BEING FROM THE SAME BATCH**

(84) Etats contractants désignés:
**DE ES**

(30) Priorité: **18.05.2005 FR 0504973**

(43) Date de publication de la demande:
**30.01.2008 Bulletin 2008/05**

(73) Titulaire: **ESSILOR INTERNATIONAL
(Compagnie Générale d'Optique)
94227 Charenton (FR)**

(72) Inventeur: **PERION, Didier
94227 Charenton (FR)**

(74) Mandataire: **Chauvin, Vincent et al
Coralis
14/16, rue Ballu
75009 Paris (FR)**

(56) Documents cités:
**EP-A- 1 155 283    DE-A1- 4 221 377
US-A- 4 596 091**

• **PATENT ABSTRACTS OF JAPAN vol. 009, no. 133 (P-362), 8 juin 1985 (1985-06-08) & JP 60 015623 A (TOUKIYOU KOUGAKU KIKAI KK), 26 janvier 1985 (1985-01-26)**

**Description**

DOMAINE TECHNIQUE AUQUEL SE RAPPORTE L'INVENTION

La présente invention concerne de manière générale le domaine de la lunetterie et plus précisément le palpage d'une paire de lentilles ophtalmiques destinée à être montée sur une monture avec ou sans cercles.

Elle vise plus particulièrement une méthode de détermination de caractéristiques géométriques d'une seconde lentille en un ensemble de points homologue d'un ensemble de points palpés appartenant à une première lentille.

Cette méthode trouve une application particulièrement avantageuse par son implémentation dans un logiciel intégré à une machine du type de celles commercialisées par Essilor International sous la marque chaîne Kappa.

ARRIERE-PLAN TECHNOLOGIQUE

La partie technique du métier de l'opticien consiste à monter une paire de lentilles ophtalmiques sur une monture sélectionnée par le porteur. Ce montage se décompose en quatre opérations principales :

- le centrage de chaque lentille qui consiste à déterminer la position qu'occupera chaque lentille sur la monture afin d'être convenablement centrée en regard de l'oeil du porteur,
- le palpage de chaque lentille qui consiste à déterminer les coordonnées des points, dans le cas d'une monture cerclée, définissant la géométrie du contour des lentilles ou, dans le cas d'une monture percée, définissant la géométrie des trous de perçage des lentilles, puis,
- le détourage de chaque lentille qui consiste à usiner ou à découper son contour à la forme souhaitée, compte tenu des paramètres de centrage définis, et enfin,
- le biseautage ou le perçage qui consiste, dans le premier cas, à réaliser un biseau ou une rainure destiné à maintenir la lentille dans un drageoir que comporte la monture de type cerclée ou, dans le second cas, à percer les lentilles de manière à pouvoir fixer la monture sur les lentilles.

Dans le cadre de la présente invention, on s'intéresse à la deuxième opération et plus spécifiquement au palpage de chaque lentille. Il s'agit, concrètement, pour l'opticien, lorsqu'il a défini sur les lentilles leur futur contour et, éventuellement, leurs futurs points de perçage, de déterminer les coordonnées des points caractéristiques du contour ou du perçage des lentilles afin de vérifier l'aptitude des lentilles à être montée sur les montures et éventuellement de régler les paramètres des opérations de débordage et de perçage (le cas échéant).

L'objectif de cette opération est en particulier, dans le cas des montures sans cercles, de vérifier que l'épaisseur des lentilles au niveau des trous de perçage est suffisante pour assurer une solidité convenable à l'ensemble une fois monté, ainsi que de définir la direction d'une tangente à la surface de la lentille au point de perçage afin de pouvoir ultérieurement percer la lentille suivant une direction normale à cette tangente.

Dans le cas des lunettes cerclées comportant une rainure, l'objectif est tout d'abord de vérifier que l'épaisseur du bord des verres est suffisante pour réaliser cette rainure, puis, de régler la position de la rainure afin d'améliorer l'esthétisme des lunettes une fois montées, et enfin de vérifier que l'épaisseur des lentilles ne gêne pas le débattement des branches des montures des lunettes.

Dans le cas des lunettes cerclées comportant un biseau, l'objectif est tout d'abord de régler la position du biseau afin d'améliorer l'esthétisme des lunettes une fois montées, puis de vérifier que l'épaisseur des lentilles ne gêne pas le débattement des branches des montures des lunettes.

Plus précisément, l'opticien, à partir des coordonnées du contour ou des trous de perçage dans le plan général de la lentille, peut palper chaque lentille mécaniquement ou optiquement afin de déterminer la hauteur des points palpés par rapport à ce plan général.

Chaque lentille destinée à être montée sur la monture est pour cela enserrée axialement dans des broches. Des palpeurs disposés de part et d'autre des faces optiques de la lentille viennent alors mesurer cette hauteur. Cette opération est réalisée sur chacune des deux lentilles.

On connaît par exemple du document US4596091 un dispositif permettant de palper successivement les faces optiques des lentilles.

On comprend donc qu'avec cette méthode, les deux lentilles n'ayant pas nécessairement les mêmes caractéristiques géométriques, il est nécessaire de fixer puis palper successivement chacune des deux lentilles afin de pouvoir placer correctement le biseau, la rainure ou les trous sur chacune des deux lentilles.

On connaît par ailleurs du document EP1155283 un dispositif permettant d'acquérir successivement les caractéristiques optiques de différentes lentilles, en plaçant successivement chaque lentille dans l'axe d'un dispositif d'acquisition d'images.

On comprend ici également qu'avec cette méthode, les deux lentilles n'ayant pas nécessairement les mêmes caractéristiques optiques, il est nécessaire de fixer puis acquérir successivement les images des deux lentilles.

On constate cependant que ces deux opérations sont consommatrices en temps.

OBJET DE L'INVENTION

Le but de la présente invention est de proposer une méthode d'acquisition rapide des caractéristiques géométriques de deux lentilles d'un même job en deux ensembles de points homologues appartenant chacun à une face correspondante des deux lentilles.

Plus particulièrement, on propose selon l'invention une méthode d'acquisition d'au moins une caractéristique géométrique en deux ensembles de points homologues de deux lentilles, l'une mesurée et l'autre déduite , appartenant à une même paire de lunettes, dont un ensemble de points mesurés appartenant à la lentille mesurée et un autre ensemble de points déduits appartenant à la lentille déduite, comportant les étapes de :

a) palper la lentille mesurée pour acquérir ladite au moins une caractéristique géométrique aux points de l'ensemble de points mesurés,

b) déduire ladite au moins une caractéristique géométrique aux points de l'ensemble de points déduits, à partir, au moins, de ladite au moins une caractéristique géométrique palpée sur la lentille mesurée et d'une puissance optique ou surfacique d'au moins la lentille déduite.

Ainsi, l'opticien ne réalise le palpage que d'une seule lentille afin de déduire des caractéristiques géométriques d'une deuxième lentille, différente de celle palpée mais destinée à une même paire de lunettes. Le calcul de déduction étant plus rapide que le palpage physique de la deuxième lentille, cette méthode permet de diminuer sensiblement le temps nécessaire à l'acquisition de caractéristiques géométriques des deux lentilles.

Les puissances optiques ou surfaciques sont, dans le cas des lentilles unifocales, des puissances globales. En revanche, dans le cas des lentilles portant une variation progressive de puissance ou encore dans le cas des lentilles bifocales, ces puissances, et en particulier la puissance optique sphérique et la puissance surfacique sphérique, sont des puissances mesurées en un ou plusieurs points de la lentille. Ces puissances varient en effet selon le point de mesure.

Selon une première caractéristique avantageuse de l'invention appliquée à l'acquisition des coordonnées spatiales des deux ensembles de points homologues, lesquels ensembles de points sont situés sur une première face optique de chacune des deux lentilles,

- on palpe, à l'étape a), la première face de la lentille mesurée pour acquérir les trois coordonnées spatiales des points du premier ensemble de points mesurés dans un référentiel lié à la première face de la lentille mesurée,
- on déduit, à l'étape b), au moins une des trois coordonnées spatiales des points du premier ensemble de points déduits dans un référentiel lié à la première face de la lentille déduite, à partir, d'une part, d'au moins deux des trois coordonnées spatiales des points du premier ensemble de points mesurés et, d'autre part, d'au moins une puissance surfacique de la première face optique d'au moins la lentille déduite.

Ainsi, le gain de temps est en particulier réalisé pour l'opération de calcul de coordonnées de points sur deux lentilles destinées à un même job, opération indispensable avant le détourage de chaque lentille.

Avantageusement, le référentiel lié à la première face de la lentille mesurée est homologue du référentiel lié à la première face de la lentille déduite.

Selon une autre caractéristique avantageuse de l'invention, la déduction de l'étape b) est réalisée à partir de la puissance surfacique sphérique et/ou cylindrique de la première face optique de la lentille déduite, avec, dans le cas d'une puissance cylindrique, l'orientation de l'axe principal de la puissance cylindrique.

Ainsi, la seule connaissance des puissances surfaciques de la face optique sur laquelle se trouvent les points déduits permet de déduire les coordonnées des points déduits, sans aucune mesure physique supplémentaire de type palpage.

Avantageusement encore, la déduction de l'étape b) est réalisée à partir de la puissance surfacique sphérique et/ou cylindrique de la première face optique de la lentille mesurée, avec, dans le cas d'une puissance cylindrique, l'orientation de l'axe principal de la puissance cylindrique, lesquelles puissances surfaciques et l'axe de cylindre sont déduits d'un palpage de la première face optique de la lentille mesurée.

Ainsi, lorsque l'opticien sait que les faces concernées des deux lentilles sont identiques, il peut utiliser les puissances surfaciques de la face optique concernée de la lentille mesurée pour déduire les coordonnées des points déduits de la lentille déduite. En effet, ayant réalisé un palpage de la lentille mesurée, les puissances surfaciques de la face concernée de la lentille déduite sont immédiatement déduites du palpage.

Selon une autre caractéristique avantageuse de l'invention, la méthode comporte une étape d'acquisition d'au moins une puissance optique d'au moins la lentille déduite et une étape de déduction de ladite au moins une puissance surfacique de la première face optique de la lentille déduite à partir au moins de ladite au moins une puissance optique de la lentille déduite.

Avantageusement encore, la méthode comporte une étape d'acquisition d'un indice commun aux deux lentilles et une étape d'acquisition d'au moins une puissance surfacique de la deuxième face optique de la lentille déduite, méthode dans laquelle ladite au moins une puissance surfacique de la première face optique de la lentille déduite est déduite de ladite au moins une puissance optique de la lentille déduite, de ladite au moins une puissance surfacique de la deuxième face optique de la lentille déduite et de l'indice de la lentille déduite.

Ainsi, l'opticien peut déduire, à partir des puissances optiques de la lentille déduite et des puissances surfaciques d'une de ses faces, les puissances surfaciques de l'autre de ses faces. Il ne lui est ici donc pas nécessaire de connaître les caractéristiques de la lentille mesurée pour en déduire ces puissances surfaciques.

Avantageusement, la méthode comporte une étape d'acquisition d'un indice commun aux deux lentilles, méthode dans laquelle ladite au moins une puissance surfacique de la première face optique de la lentille déduite est déduite d'une part de la différence entre ladite au moins une puissance optique de la lentille déduite et ladite au moins une puissance optique de la lentille mesurée, de leur indice commun et de ladite au moins une puissance surfacique de la première face optique de la lentille mesurée.

Ainsi, l'opticien peut déduire, à partir des puissances surfaciques d'une des face de la lentille mesurée et des puissances optiques des deux lentilles, les puissances surfaciques de la face correspondante de la lentille déduite. Il ne lui est ici pas nécessaire de connaître les puissances surfaciques d'une des deux faces de la lentille déduite pour en déduire celles de l'autre face.

Selon une autre caractéristique de l'invention, préalablement à l'étape b), on définit deux des trois coordonnées spatiales des points du premier ensemble de points déduits, dont une première et une deuxième coordonnées, et, à l'étape b), on déduit la troisième coordonnée des points du premier ensemble de points déduits. Avantageusement alors, ladite troisième coordonnée des points du premier ensemble de points déduits est représentative de l'altitude des points du premier ensemble de points déduits suivant un axe de la lentille déduite, les deux autres coordonnées des points du premier ensemble de points déduits étant représentatives de la position des points du premier ensemble de points déduits dans un plan général ne contenant pas ledit axe de la lentille déduite.

Selon une autre caractéristique de l'invention, préalablement à l'étape a), on définit deux des trois coordonnées spatiales des points du premier ensemble de points mesurés, dont une première et une deuxième coordonnées, et, à l'étape a), on acquiert par palpage la troisième coordonnée des points du premier ensemble de points mesurés. Avantageusement alors, ladite troisième coordonnée des points du premier ensemble de points mesurés est représentative de l'altitude des points du premier ensemble de points mesurés suivant un axe de la lentille mesurée, les deux autres coordonnées des points du premier ensemble de points mesurés étant représentatives de la position des points du premier ensemble de points mesurés dans un plan général ne contenant pas ledit axe de la lentille mesurée.

Selon une autre caractéristique de l'invention, les premières faces des deux lentilles étant globalement sphériques selon un rayon moyen, les deux lentilles présentant un centre optique, l'axe de chacune des deux lentilles correspondant à l'axe optique qui est défini comme étant l'axe passant par le centre optique et normal à la première face optique de la lentille, le plan général de chaque lentille étant orthogonal à l'axe optique et passant par le centre optique de la lentille, la lentille mesurée et la lentille déduite présentant un indice commun, la déduction, à l'étape b), de la troisième coordonnée des points du premier ensemble de points déduits de la première face de la lentille déduite est réalisée au moyen de la formule :

$$h1' = h1 + (R\_ - \_1\_)^{1/2} - (R'\_ - \_1'\_)^{1/2} ,$$

h1' étant la troisième coordonnée du premier point déduit appartenant à la première face de la lentille déduite, h1 étant la troisième coordonnée du premier point mesuré appartenant à la première face de la lentille mesurée, \_1' étant la première coordonnée du premier point déduit définie comme étant la distance entre l'axe optique de la première face optique de la lentille déduite et le point déduit, \_1 étant la première coordonnée du premier point mesuré définie comme étant la distance entre l'axe optique de la première face optique de la lentille mesurée et le premier point mesuré, R étant le rayon de courbure moyen de la première face optique de la lentille mesurée, et R' étant le rayon de courbure moyen de la première face optique de la lentille déduite.

Ainsi, connaissant les coordonnées d'un point du premier ensemble de points mesurés de la première face de la lentille mesurée, l'opticien, à l'aide d'un simple et rapide calcul, peut déduire les coordonnées du point homologue appartenant à la première face de la lentille déduite.

Dans le cas des lentilles unifocales, le centre optique correspond au point des lentilles où les rayons incidents ne sont pas déviés par la lentille. Dans le cas des lentilles portant une variation progressive de puissance, un tel point n'existant pas, on entend par centre optique le point de référence prisme. Ce point est défini par le fabricant des lentilles sur chacune des deux lentilles. Il correspond sur chacune des deux lentilles à un point central présentant la même puissance optique prismatique sur chacune des deux lentilles (déduction faite de la puissance prismatique prescrite sur chaque lentille). Dans le cas des lentilles de la demanderesse, cette puissance optique prismatique correspond environ au deux tiers de l'addition des lentilles.

Selon une autre caractéristique de l'invention, la méthode comporte les étapes supplémentaires de :

- palper la deuxième face de la lentille mesurée pour acquérir les trois coordonnées spatiales des points d'un deuxième ensemble de points mesurés en regard des points du premier ensemble de points mesurés dans un référentiel lié à la première face de la lentille mesurée,
- déduire l'épaisseur mesurée entre les points du premier ensemble de points mesurés et les points du deuxième ensemble de points mesurés de la lentille mesurée,
- déduire l'épaisseur déduite de la lentille déduite entre d'une part, les points du premier ensemble de points déduits et, d'autre part, les points d'un deuxième ensemble de points déduits situés sur la deuxième face de la lentille déduite en regard des points du premier ensemble de points déduits, à partir, au moins, de l'épaisseur mesurée, des première et deuxième coordonnées spatiales des points du premier ensemble de points mesurés, de l'indice des deux lentilles et d'au moins une caractéristique optique des deux lentilles.

Ainsi, sans calculer les coordonnées de deux points en regard de la lentille déduite, l'opticien peut déterminer simplement et rapidement l'épaisseur de la lentille déduite au point considéré.

Avantageusement, la méthode comporte une étape d'acquisition des caractéristiques optiques des deux lentilles dont au moins une puissance optique sphérique et/ou cylindrique et/ou prismatique avec, dans le cas, d'une puissance cylindrique, l'orientation de l'axe principal de la puissance cylindrique.

Avantageusement, la méthode comporte une étape de déduction des coordonnées spatiales des points du deuxième ensemble de points déduits, à partir, au moins, de l'épaisseur déduite entre les points du premier ensemble de points déduits et les points du deuxième ensemble de points déduits, et des coordonnées spatiales des points du premier ensemble de points déduits.

Ainsi, cette méthode permet de connaître les coordonnées des points du deuxième ensemble de points déduits appartenant à la deuxième face optique de la lentille déduite. Il est en particulier ainsi possible de connaître les coordonnées des points de la deuxième face optique de la lentille déduite sans connaître les puissances surfaciques de la deuxième face optique de la lentille déduite.

Selon une autre caractéristique de l'invention, les deux lentilles présentant un centre optique et une ligne d'horizon définissant des référentiels optiques, les points du premier ensemble de points mesurés et du premier ensemble de points déduits étant des points associés à la monture, on repère les référentiels optiques des deux lentilles, on positionne la monture dans ledit plan général de chaque lentille de manière à centrer les lentilles en regard du point pupillaire par rapport à la monture et on en déduit les premières et deuxièmes coordonnées des points du premier ensemble de points mesurés et du premier ensemble de points déduits homologues.

Ainsi, lorsque la position de centrage de la lentille déduite n'est pas symétrique à celle de la lentille mesurée par rapport au centre de la monture, l'opticien peut tenir compte de cette dissymétrie dans la déduction des coordonnées des points déduits, homologues des points mesurés, dans le plan général de la lentille déduite. Une telle dissymétrie peut par exemple provenir du fait que le porteur présente des écarts entre le centre de son nez et chacune de ses pupilles qui ne sont pas identiques.

Selon une autre caractéristique de l'invention, les deux lentilles de la paire de lunettes étant destinées à être détourées selon un contour de forme et de position connues en projection dans le plan général de chacune des deux lentilles,

- on palpe, à l'étape a), un premier ensemble de points mesurés sur la première face de la lentille mesurée décrivant ledit contour pour acquérir la troisième coordonnée des points de l'ensemble des points mesurés,
- on déduit, à l'étape b), les première et deuxième coordonnées des points du premier ensemble de points déduits à partir d'au moins une des deux premières coordonnées de chaque point du premier ensemble de points mesurés homologues et de la forme et de la position en projection dans le plan général du contour de la lentille déduite,
- on déduit, à l'étape b), la troisième coordonnée de chaque point du premier ensemble de points déduits de la lentille déduite.

Avantageusement encore, la méthode comporte les étapes supplémentaires de :

- palper la deuxième face optique de la lentille mesurée afin d'acquérir les coordonnées spatiales des points d'un deuxième ensemble de points mesurés situés en regard des points du premier ensemble de points mesurés de la première face optique de la lentille mesurée,

- déduire l'épaisseur mesurée entre chaque point du premier ensemble de points mesurés et chaque point du deuxième ensemble de points mesurés de la lentille mesurée en regard,
- déduire l'épaisseur déduite de la lentille déduite entre chaque point du premier ensemble de points déduits et chaque point d'un second ensemble de points déduits situés en regard des points du premier ensemble de points déduits de la première face optique de la lentille déduite, à partir, au moins, de l'épaisseur mesurée, des première et deuxième coordonnées spatiales des points du premier ensemble de points mesurés et du premier ensemble de points déduits et, au moins, de la puissance surfacique sphérique de chacune des deux lentilles.

Ainsi, l'opticien, à partir du palpage du contour de la lentille mesurée sur chacune de ses deux faces optiques, peut déduire les coordonnées des points des deux ensembles de points déduits, homologues des points des deux ensembles de points mesurés. Il obtient ainsi la position et la forme du contour sur chacune des deux faces optiques de la lentille déduite. Il peut alors réaliser les vérifications désirées sur les futurs chants de chacune des deux lentilles.

Avantageusement, les deux lentilles présentent un centre optique et une ligne d'horizon, l'axe de la lentille correspondant à l'axe optique, une ligne verticale étant définie comme étant la droite perpendiculaire à la ligne d'horizon et à l'axe optique de la première face optique de la lentille, la déduction des première et deuxième coordonnées de chaque point considéré du premier ensemble de points déduits est réalisée de telle sorte que chaque point du premier ensemble de points déduits de la lentille déduite soit situé,

- d'une part, dans un demi-plan qui contient l'axe optique de la première face optique de la lentille déduite, qui part de cet axe optique et qui, si les deux lentilles sont superposées avec leur centre optique et leur ligne d'horizon confondus, est symétrique, par rapport à la ligne verticale, du demi plan contenant le point du premier ensemble de points mesurés homologue du point considéré et l'axe optique de la première face optique de la lentille mesurée et qui part de cet axe optique,
- d'autre part, à une distance de l'axe optique de la première face optique de la lentille déduite qui est fonction, dans le plan général de la lentille déduite, de la forme et de la position du contour de la lentille déduite et du demi plan dans lequel le point considéré de l'ensemble de points déduits est situé.

Selon un autre mode opératoire de l'invention, les deux lentilles de la paire de lunettes étant destinées à être percées en des points d'ancrage pour leur montage sur une monture du type sans cercle et ces points d'ancrage ayant des première et deuxième coordonnées prédéfinies dans le plan général de la lentille mesurée, les premiers ensembles de points mesurés et déduits consistent en ces points d'ancrage. Avantageusement encore, les premiers ensembles de points mesurés et déduits consistent, pour chaque point d'ancrage, en au moins deux points distincts situés à proximité de ce point d'ancrage sur les premières faces des deux lentilles, et avec lesquels on calcule, en fonction de leurs coordonnées spatiales obtenues respectivement par palpage et déduction, les coordonnées du plan passant par ce point d'ancrage et normal à la droite passant par les deux points distincts. Avantageusement encore, on calcule l'épaisseur déduite de la lentille déduite en chaque point d'ancrage.

Ainsi, l'opticien, à partir du palpage d'une seule lentille, peut préparer le perçage de la deuxième lentille sans la palper. Il peut ainsi vérifier que l'épaisseur aux points d'ancrage est suffisante et il peut en outre calculer une normale à une tangente à la première face de chaque lentille au niveau des points d'ancrage en un temps réduit.

Avantageusement, dans la déduction de l'étape b), il est tenu compte des éventuelles puissances surfaciques sphériques et/ou cylindriques des faces concernées des deux lentilles (10,20).

Selon un autre mode opératoire de l'invention appliquée à l'acquisition des épaisseurs de deux lentilles en deux ensembles de points homologues :

- on palpe, à l'étape a), les deux faces de la lentille mesurée pour acquérir l'épaisseur mesurée entre un premier ensemble de points mesurés sur une première face de la lentille mesurée et un deuxième ensemble de points mesurés situé sur une deuxième face de la lentille mesurée, en regard du premier ensemble de points mesurés, et
- on déduit, à l'étape b), l'épaisseur déduite de la lentille déduite entre un premier ensemble de points déduits sur la première face de la lentille déduite et un deuxième ensemble de points déduits sur la deuxième face de la lentille déduite en regard du premier ensemble de points déduits, à partir, d'au moins l'épaisseur mesurée, de l'indice des deux lentilles et de la différence des puissances optiques des deux lentilles.

Ainsi, si les coordonnées des deux points homologues sont connus, par exemple si les premières faces optiques des deux lentilles sont identiques, il est directement possible d'acquérir les épaisseurs des deux lentilles sans calcul supplémentaire.

Avantageusement, la méthode comporte une étape de mesure optique des deux lentilles et une étape de déduction des puissance optiques des deux lentilles, dont au moins une puissance optique sphérique et/ou cylindrique et/ou prismatique avec, dans le cas, d'une puissance cylindrique, l'orientation de l'axe principal de la puissance cylindrique.

On propose selon l'invention un dispositif pour la mise en oeuvre de la méthode selon l'une des revendications précédentes comprenant des moyens de mesure aptes à repérer les référentiels optiques des deux lentilles, des moyens de palpage de la lentille mesurée, des moyens d'acquisition des puissances optiques des deux lentilles, un système électronique et/ou informatique conçu pour exécuter les déductions de l'étape b).

Ainsi, le travail de l'opticien est facilité dans la mesure où, afin de mettre en oeuvre cette méthode de déduction, il réalise uniquement le palpage de la lentille mesurée et le dispositif réalise rapidement les opérations supplémentaires.

DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :

- la figure 1 a est une vue schématique en perspective d'une lentille mesurée, des points et de leurs coordonnées caractéristiques de la méthode d'acquisition selon l'invention ;
- la figure 1b est une vue schématique en perspective d'une lentille déduite, des points et de leurs coordonnées caractéristiques de la méthode d'acquisition selon l'invention ; et
- la figure 2 est une vue schématique des palpeurs d'une machine de palpage.

Pour la mise en oeuvre du dispositif, il faut disposer des moyens bien connus en eux-mêmes de l'homme du métier. Ces moyens ne font pas en propre l'objet de l'invention décrite.

Ainsi, parmi les moyens bien connus, il est possible d'utiliser un appareil de palpage tel que décrit dans le brevet FR2543039 ou commercialisé par Essilor International sous la marque Chaîne Kappa et disposant d'un logiciel de pilotage du palpage et de récupération des données acquises.

La mise en oeuvre du dispositif trouve une application particulièrement avantageuse par l'implémentation, dans un logiciel intégré à une machine pourvue d'une unité de traitement, d'un programme de calcul apte à exécuter l'étape b) de la méthode d'acquisition décrite. Cette machine pourra par exemple être une machine de détourage.

En pratique l'opticien dispose de deux lentilles d'un même job, c'est-à-dire destinées à une même paire de lunettes, une lentille mesurée 10, par exemple la lentille gauche, et une lentille déduite 20, par exemple la lentille droite, destinées à être montées sur une même monture. Les deux lentilles ne sont pas nécessairement identiques, de sorte qu'elles ne sont pas nécessairement centrées symétriquement sur la monture et qu'elles ne présentent pas nécessairement les mêmes caractéristiques géométriques.

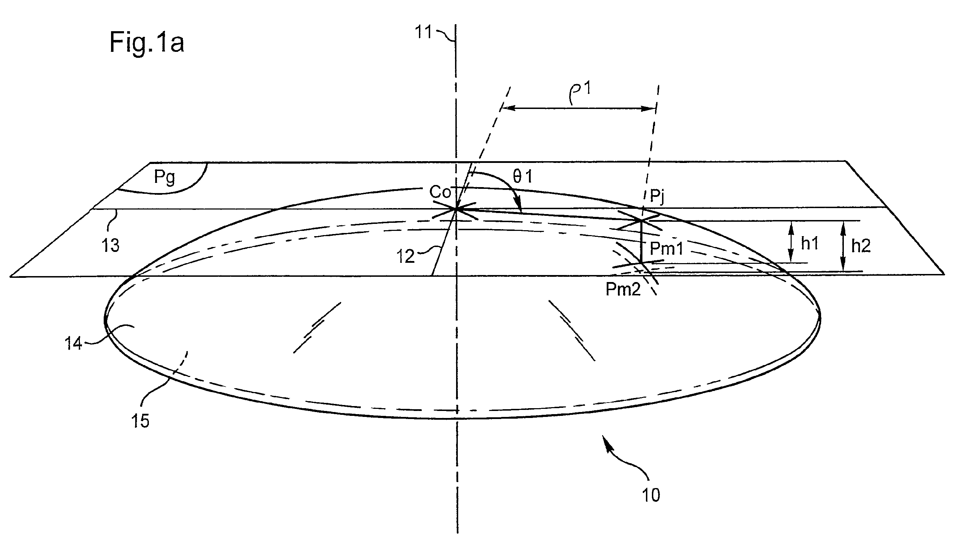

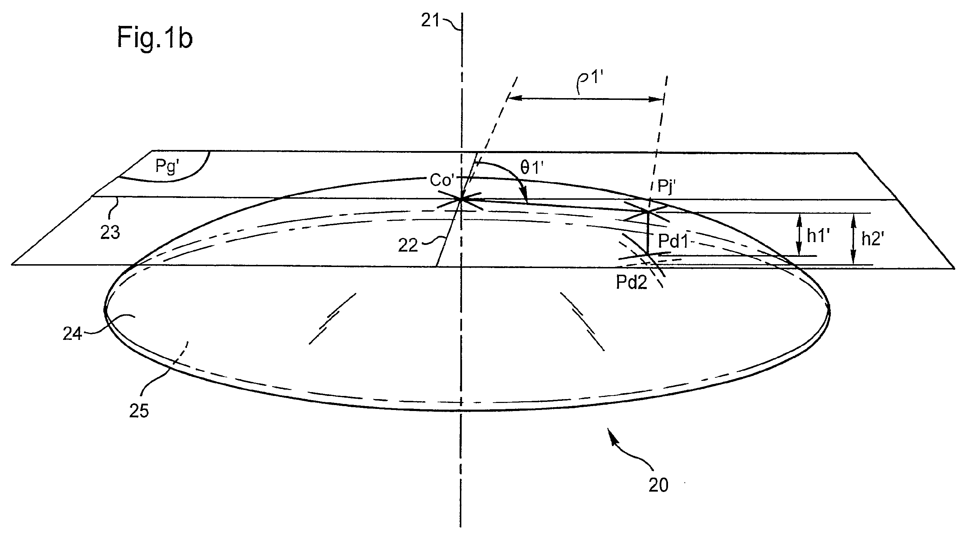

Sur les figures 1 et 1 b, on a respectivement représenté la lentille mesurée 10 et la lentille déduite 20. Ces deux lentilles 10,20 ne sont pas détourées. Elles présentent donc des contours généralement circulaires comportant des diamètres _,_' sensiblement équivalents avant leur détourage. Elles présentent par ailleurs une épaisseur au centre Ec,Ec'. Les faces convexes 14,24 des lentilles 10,20 présentent une forme globalement sphérique de rayon de courbure moyen R,R'. En revanche, les faces concaves 15,25 des deux lentilles 10,20 présentent, d'une première part, des puissances surfaciques sphériques Ps.Ps', d'une deuxième part, des puissances prismatiques Px,Px' selon l'axe horizontal 13,23 et des puissances prismatiques Ppy,Ppy' selon l'axe vertical 12,22 des lentilles 10,20, et, de troisième part, des puissances cylindriques Pc,Pc' selon un axe de cylindre a,a'. Par ailleurs, les deux lentilles mesurée 10 et déduite 20 présentent un indice n commun. L'ensemble des puissances surfaciques des deux lentilles 10,20 ainsi que leur indice n déterminent leurs puissances optiques. Ces puissances optiques sont en particulier les puissances optiques sphériques S,S', cylindriques C,C' et prismatiques Px,Px',Py,Py'.

En effet, de façon connue en soi, on définit la puissance optique sphérique S par la formule :

$$S = (n-1).\left(\frac{1}{R} - \left(\frac{1}{R_1} + \frac{1}{R_2}\right)\right) - \frac{Ec}{n}.\frac{1}{R}.\left(\frac{1}{R_1} + \frac{1}{R_2}\right)$$

où $R_1$ et $R_2$ sont les rayons de courbure maximal et minimal de la surface concave de la lentille exprimés en mètres et R le rayon de courbure moyen de la surface convexe exprimé en mètres. Quant à la puissance optique cylindrique, on la définit par la formule :

$$C = \frac{n-1}{2} \cdot \left| \frac{1}{R_1} - \frac{1}{R_2} \right|$$

Les puissances optiques prismatiques suivant l'axe horizontal Px,Px' et suivant l'axe vertical Py,Py' sont définies par les formules :

$$Px \approx (n-1)\_x$$

$$Py \approx (n-1)\_y$$

où \_x est la projection, dans le plan orthogonal au plan général Pg,Pg' de la lentille considérée contenant l'axe horizontal 13,23 de la lentille, de l'angle formé par les deux plans tangents aux deux surfaces du verre en deux points en vis-à-vis ; et où \_y est la projection, dans le plan vertical orthogonal au plan général Pg,Pg' de la lentille considérée contenant l'axe vertical 12,22 de la lentille, de l'angle formé par les deux plans tangents aux deux surfaces du verre en deux points en vis-à-vis.

Ainsi, on définit le pouvoir de correction optique d'une lentille ophtalmique correctrice par ses propriétés de réfringence sphérique, cylindrique et prismatique. On comprend qu'une telle définition optique revêt une portée plus générale qu'une définition purement surfacique : elle définit dans sa globalité l'effet de réfringence de la lentille sur un rayon lumineux incident, résultant de la somme algébrique de la réfringence opérée successivement sur les faces avant et arrière de la lentille. On comprend qu'une telle définition optique englobe une pluralité, voire une infinité, de combinaisons de paires de surfaces produisant le même effet de réfringence optique global, comme exposé dans le document « Theoritical aspects of concentric varifocal lenses » de W.N. CHARMAN, dans Ophtal. Physiol. Opt. Vol.2 No.1 pages 75-86, 1982, publié par Pergamon Press pour le British College of Ophtalmie Opticians.

Dans le cadre de la présente invention, les valeurs numériques des grandeurs optiques utilisées dans les définitions (puissances optiques sphériques, cylindriques et prismatiques) sont obtenues, par exemple, par la méthode de mesure optique dite de frontofocométrie bien connue des opticiens et précisément décrite dans le document « Paraxial Optics » de W.F. Long, dans Visual Optics and Instrumentation, Ed. N. Charman, Macmillan Press, London 1991, pages 418-419, incorporé par référence à la présente demande. Ces valeurs numériques sont dans certains cas déjà connues de l'opticien, auquel cas il les rentre directement manuellement dans le logiciel de calcul.

La « puissance de réfringence sphérique » S,S' d'une lentille pour un rayon incident traversant cette lentille, également appelée puissance totale ou puissance réfringente ou puissance de focalisation ou puissance optique sphérique, est la grandeur qui caractérise et quantifie le premier effet de réfringence sphérique (effet « loupe ») de la lentille sur le rayon considéré : si elle est positive, la lentille a un effet convergent sur le rayon ; si elle est négative, l'effet sur le rayon est divergent.

La « puissance de réfringence cylindrique » C,C' d'une lentille pour un rayon incident traversant cette lentille est la grandeur qui caractérise et quantifie l'effet de réfringence cylindrique exercé par la lentille sur le rayon considéré, selon lequel il se forme non pas une seule mais deux aires focales, situées dans des plans différents, généralement perpendiculaires entre elles et appelées focales tangentielle et focale sagittale. Cette puissance cylindrique, également appelée « puissance d'astigmatisme » ou simplement « astigmatisme », correspond à la différence des puissances sphériques suivant les deux aires focales.

La « puissance de réfringence prismatique » d'une lentille pour un rayon incident traversant cette lentille est la grandeur qui caractérise et quantifie l'effet de réfringence prismatique, ou plus simplement de déviation, exercé par la lentille sur le rayon considéré. Cette puissance prismatique, également appelée « prisme », correspond à l'angle de déviation du rayon, c'est-à-dire l'angle formé entre les parties entrantes et sortantes du rayon. Le prisme se décompose en deux composantes : l'une horizontale Px,Px', appelée prisme horizontal, correspondant à l'angle formé entre les projections des parties entrantes et sortantes du rayon dans le plan horizontal, l'autre verticale Py,Py', appelée prisme vertical, correspondant à l'angle formé entre les projections des parties entrantes et sortantes du rayon dans le plan vertical. Dans cette définition, on considère un verre disposé dans sa configuration classique d'utilisation : axe optique à l'horizontale et cercles de montage définissant une droite horizontale. L'unité de mesure du prisme est la dioptrie prismatique qui correspond à une déviation du faisceau de 1 cm à une distance de 1 m (soit approximativement 0,57 degré).

Chacune des deux lentilles 10,20 est repérée par un référentiel optique défini par un centre optique Co,Co' et par une ligne d'horizon 13,23. Chacun des référentiel définit ainsi, d'une part, un axe optique 11,21 correspondant, par exemple, à l'axe normal à la face convexe 14,24 de chaque lentille 10,20 et passant par le centre optique Co,Co' de chaque lentille 10,20, et, d'autre part, un plan général Pg,Pg' correspondant au plan normal à l'axe optique 11,21 et passant par le centre optique Co,Co' de chaque lentille 10,20. Chaque référentiel définit par ailleurs une ligne verticale 12,22 perpendiculaire à la ligne d'horizon 13,23 dans le plan général Pg,Pg' de chaque lentille 10,20 et passant par le centre optique Co,Co' de chaque lentille 10,20.

Conformément à la figure 1a, chaque premier point mesuré Pm1 d'un premier ensemble de points mesurés Pm1 appartenant à la face optique convexe 14 de la lentille mesurée 10 et chaque second point mesuré Pm2 d'un deuxième ensemble de points mesurés Pm2 appartenant à la face optique concave 15 de la lentille mesurée 10 est respectivement repéré, dans un repère cylindrique attaché au référentiel optique de la lentille mesurée 10, par trois coordonnées _1,_1,h1 et _2,_2,h2. Les deux ensembles de points mesurés Pm1,Pm2 sont construits de sorte qu'en regard de chaque premier point mesuré Pm1 soit disposé un second point mesuré Pm2. La première coordonnée _1 de chaque premier point mesuré Pm1 est égale à la première coordonnée _2 de chaque second point mesuré Pm2 en regard. Cette première coordonnée _1 correspond à la distance entre le centre optique Co de la lentille mesurée 10 et un point projeté Pj, projection du premier point mesuré Pm1 considéré dans le plan général Pg de la lentille mesurée 10 selon l'axe optique 11. La deuxième coordonnée _1 de chaque premier point mesuré Pm1 est égale à la deuxième coordonnée _2 de chaque second point mesuré Pm2 en regard. Cette deuxième coordonnée _1 correspond à l'angle formé au centre optique Co dans le sens trigonométrique entre, d'une part, une demi-droite partant du centre optique Co selon la ligne verticale 12 vers le haut de la lentille mesurée 10 et, d'autre part, une demi-droite partant du centre optique Co et passant par ledit point projeté Pj. La troisième coordonnée h1 de chaque premier point mesuré Pm1 correspond à la distance séparant ce premier point mesuré Pm1 de son point projeté Pj. La troisième coordonnée h2 de chaque second point mesuré Pm2 correspond à la distance séparant ce second point mesuré Pm2 de son point projeté Pj.

Conformément à la figure 1b, chaque premier point déduit Pd1 d'un premier ensemble de points déduits Pd1 appartenant à la face optique convexe 24 de la lentille déduite 20 et chaque second point déduit Pd2 d'un deuxième ensemble de points déduits Pd2 appartenant à la face optique concave 25 de la lentille déduite 20 est respectivement repéré, dans un repère cylindrique attaché au référentiel optique de la lentille déduite 20, par trois coordonnées _1',_1',h1' et _2',_2',h2'. Les deux ensembles de points déduits Pd1,Pd2 sont construits de sorte qu'en regard de chaque premier point déduit Pd1 soit disposé un second point déduit Pd2. La première coordonnée _1' de chaque premier point déduit Pd1 est égale à la première coordonnée _2' de chaque second point déduit Pd2 en regard. Cette première coordonnée _1' correspond à la distance entre le centre optique Co' de la lentille déduit 20 et un point projeté Pj', projection du premier point déduit Pd1 considéré dans le plan général Pg' de la lentille déduite 20 selon l'axe optique 21. La deuxième coordonnée _1' de chaque premier point déduit Pd1 est égale à la deuxième coordonnée _2' de chaque second point déduit Pd2 en regard. Cette deuxième coordonnée _1' correspond à l'angle formé au centre optique Co' dans le sens trigonométrique entre, d'une part, une demi-droite partant du centre optique Co' selon la ligne verticale 22 vers le haut de la lentille déduite 20 et, d'autre part, une demi-droite partant du centre optique Co' et passant par ledit point projeté Pj'. La troisième coordonnée h1' de chaque premier point déduit Pd1 correspond à la distance séparant ce premier point déduit Pd1 de son point projeté Pj'. La troisième coordonnée h2' de chaque second point déduit Pd2 correspond à la distance séparant ce second point déduit Pd2 de son point projeté Pj'.

Deux points homologues, un premier point mesuré Pm1 et un premier point déduit Pd1, appartenant à la surface convexe des deux lentilles 10,20, ont des premières et deuxièmes coordonnées qui dépendent non seulement les unes des autres mais aussi de la géométrie des contours souhaités après détourage des lentilles 10,20 (correspondant à la forme du cercle de la monture si les lunettes sont de type cerclées ou à la forme du contour choisi par le porteur si les lunettes sont de type percées). Ainsi, la déduction des première _1' et deuxième _1' coordonnées d'un premier point déduit Pd1 est réalisée de telle sorte que ce premier point déduit Pd1 de la lentille déduite 20 soit situé,

- d'une part, dans un demi-plan qui contient l'axe optique 21 de la face optique convexe de la lentille déduite 20, qui part de cet axe optique 21 et qui, si les deux lentilles 10,20 sont superposées avec leur centre optique Co,Co' et leur ligne d'horizon 13,23 confondus, est symétrique, par rapport à la ligne verticale 12,22, du demi plan contenant le point mesuré Pm1 homologue et l'axe optique 11 de la face optique convexe de la lentille mesurée 10 et qui part de cet axe optique 11, et,
- d'autre part, à une distance _1' de l'axe optique 21 de la face optique convexe de la lentille déduite 20 qui est fonction, dans le plan général Pg' de la

lentille déduite 20, de la forme, de la dimension et de la position du contour souhaité après détourage de la lentille déduite 20 et du demi plan dans lequel ce point déduit Pd1 est situé.

Selon le mode de réalisation représenté sur les figures 1a et 1b, chaque lentille 10,20 est destinée à être montée sur une monture cerclée et donc, au préalable, à être détourée selon un contour présentant une forme, une dimension et une position connues dans le plan général Pg,Pg' associé à chaque lentille 10,20.

Selon la méthode d'acquisition des coordonnées spatiales _1,_1,h1,_1',_1',h1' des points de deux ensembles de points Pm1,Pd1 homologues selon l'invention, l'opticien déclenche tout d'abord à l'étape a) le logiciel pilotant le palpage d'un premier ensemble de points mesurés Pm1 sur la face convexe 14 de la lentille mesurée 10, et d'un deuxième ensemble de points mesurés Pm2 sur la surface concave 15 de la lentille mesurée 10, en regard des points du premier ensemble de points mesurés Pm1, le long du contour prévu. Il acquiert ainsi les coordonnées spatiales _1,_1,h1 des premiers points mesurés Pm1 et les coordonnées spatiales _2,_2,h2 des seconds points mesurés Pm2. Ces points Pm1,Pm2 constituent un échantillonnage du contour prévu. Les premières coordonnées spatiales _1,_2 des points mesurés Pm1,Pm2 en regard sont identiques. De la même manière, les deuxièmes coordonnées spatiales _1,_2 des points mesurés Pm1,Pm2 en regard sont identiques. On peut, pour effectuer ce palpage, utiliser un appareil de palpage tel que celui décrit par exemple dans le brevet FR2543039.

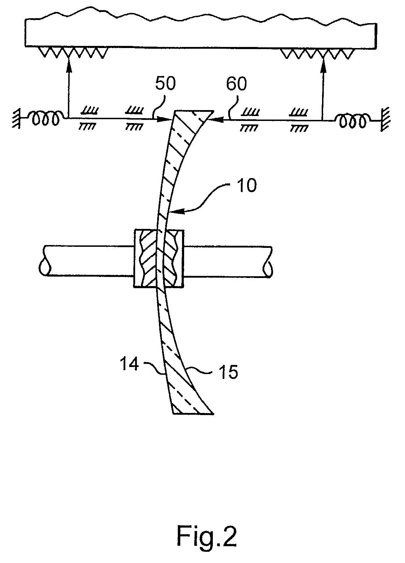

Comme le montre plus particulièrement la figure 2, ce palpage est réalisé de telle sorte que deux points mesurés Pm1,Pm2 en regard soient palpés simultanément. Pour cela, l'opticien définit au préalable leurs deux premières coordonnées _1,_1,_2,_2 dans le plan général Pg de la lentille mesurée 10. Deux palpeurs 50,60 en vis-à-vis se déplacent de manière à présenter les mêmes coordonnées _1,_1 dans le plan général Pg de la lentille mesurée 10 puis viennent en contact de la lentille mesurée 10 et transmettent la valeur de la troisième coordonnée h1,h2 des points mesurés Pm1,Pm2.

Les premier et deuxième ensembles de points mesurés Pm1,Pm2 sont disposés sur le contour souhaité après détourage de la lentille mesurée 10, sur chacune de ses faces optiques 14,15. Connaissant les coordonnées spatiales de ces points mesurés Pm1,Pm2, il est possible d'interpoler leurs coordonnées sur chacune des faces de la lentille afin de déterminer et de visualiser la géométrie du futur chant de la lentille mesurée 10 lorsqu'elle aura été détourée selon le contour souhaité.

A la suite de ce premier palpage, l'opticien peut déclencher le logiciel pilotant le palpage de points mesurés Pm1,Pm2 supplémentaires, à l'intérieur du contour de la lentille mesurée 10, de manière à pourvoir calculer plus facilement les puissances surfaciques de chacune des deux faces optiques de la lentille mesurée 10.

La face convexe 14 de la lentille mesurée 10 étant sphérique ou considérée comme approximativement sphérique, l'opticien peut déduire aisément le rayon de courbure moyen R de la sphère décrite par la face convexe 14 de la lentille mesurée 10 soit à l'aide des coordonnées spatiales de trois premiers points mesurés Pm1 alignés et distincts, soit, le plus souvent, à l'aide de la puissance optique de la lentille mesurée. En effet, à chaque puissance optique d'une lentille correspond un rayon de courbure moyen R. Le tableau suivant fournit un exemple de valeurs de rayons de courbure moyens R en fonction de la puissance optique sphérique S de la lentille considérée.

| S (Dioptries) | -20 | -15 | -10 | -7 | -4 | 0 | 5 | 10 | 15 |
|---|---|---|---|---|---|---|---|---|---|
| 1/R (mètres$^{-1}$) | 0,5 | 0,5 | 0,7 | 1,8 | 3 | 4,75 | 8,2 | 13,5 | 16 |

La déduction d'un rayon de courbure moyen par rapport à une puissance optique sphérique S non fournie dans le tableau se fait par interpolation linéaire entre les deux valeurs de puissances optiques sphériques les plus proches.

La face concave 15 de la lentille mesurée 10 présentant des puissances surfaciques non seulement sphérique Ps mais aussi cylindrique Pc et prismatiques Ppx,Ppy, un nombre plus important de points palpés est nécessaire afin d'en déduire la valeur de sa puissance surfacique sphérique Ps, la valeur de sa puissance surfacique cylindrique Pc et de son axe de cylindre a et la valeur de ses puissances surfaciques prismatiques Ppx,Ppy selon la ligne d'horizon et selon la ligne verticale de la lentille mesurée 10.

A l'issu de cette étape, le logiciel de l'appareil de palpage dispose des coordonnées acquises des points des premier et deuxième ensembles de points mesurés Pm1,Pm2. Ces coordonnées sont alors transmises au logiciel intégrant le programme de calcul. Ce dernier déduit alors l'épaisseur mesurée E de la lentille mesurée 10 entre chaque premier point mesuré Pm1 et chaque second point mesuré Pm2 en regard.

Selon une caractéristique particulièrement avantageuse de la méthode, à l'étape b), les coordonnées spatiales _1',_1',h1',_2',_2',h2' des points déduits Pd1,Pd2 de la lentille déduite 20 ne sont pas acquises par palpage mais sont déduites par calcul.

Le logiciel de calcul dispose pour cela du rayon de courbure moyen R' de la face convexe de la lentille déduite 20 qui, soit, le plus souvent, est identique au rayon de courbure moyen R de la face convexe de la lentille mesurée 10, soit est déduit de la puissance optique de la lentille déduite 20 selon une technique identique à celle utilisée pour la lentille mesurée 10.

Les valeurs des rayons de courbure moyens R,R' des faces convexes 14,24 des deux lentilles 10,20 ayant été saisies par l'opticien ou déterminées par le logiciel intégrant le programme de calcul, le logiciel déduit, dans un premier temps, les coordonnées spatiales _1',_1',h1' des points du premier ensemble de points déduits Pd1 appartenant à la surface convexe 24 de la lentille déduite 20 et homologues des points du premier ensemble de points mesurés Pm1 appartenant à la face convexe 14 de la lentille mesurée 10. Le logiciel doit dans un premier temps déterminer les première et deuxième coordonnées _1',_1' de chaque premier point déduit Pd1 qui sont déterminées par les caractéristiques définissant deux points Pm1,Pd1 homologues. Le logiciel peut alors déduire la distance h1' séparant chaque premier point déduit Pd1 du plan général Pg' de la lentille déduite 20. Cette opération est réalisée par comparaison des puissances surfaciques des faces convexes 14,24 deux lentilles 10,20 au moyen de deux formules.

Si les rayons de courbure moyens R,R' des deux lentilles 10,20 sont sensiblement différents, alors la distance h1' est déduite de la formule :

$$h1' \approx h1 + (R^2 - \rho 1^2)^{1/2} - (R'^2 - \rho 1'^2)^{1/2}.$$

En revanche, si les rayons de courbure moyens R,R' des deux lentilles 10,20 sont proches, c'est-à-dire si le résultat de la formule précédente est tel que h1'/h1 est inférieur à 0.1, alors la distance h1' peut être plus précisément déduite de la formule :

$$h1' \approx h1 + \_.\rho 1^2/R - \_.\rho 1'^2/R' - (\rho 1' - \rho 1). \rho 1/R.$$

Le logiciel dispose ainsi des trois coordonnées spatiales _1',_1',h1' de tous les premiers points déduits Pd1 homologues des premiers points mesurés Pm1. Ces premiers points déduits Pd1 décrivent ainsi le futur contour de la lentille déduite 20 sur sa face convexe 24.

Les deux premières coordonnées (_2',_2') de chaque second point déduit Pd2 sont identiques aux deux premières coordonnées (_1',_1') de chaque premier point déduit Pd1 en regard. Afin de déterminer la troisième coordonnée spatiale h2' de chaque point du deuxième ensemble de points déduits Pd2, le programme de calcul détermine tout d'abord l'épaisseur déduite E' de la lentille déduite 20 entre chaque premier point déduit Pd1 et chaque second point déduit Pd2 en regard. Cette détermination est réalisée à partir des puissances optiques mesurées des lentilles mesurée 10 et déduite 20 et éventuellement de leur diamètre _,_'.

Les puissances optiques d'une lentille (ses puissances réfractives) dépendent des puissances surfaciques de ses deux faces concave et convexe, de son épaisseur au centre Ec,Ec' et de son indice n. Le logiciel de calcul, en comparant les différentes puissances optiques des deux lentilles 10,20 peut déduire l'épaisseur déduite E' de la lentille déduite 20 entre chaque premier point déduit Pd1 et chaque second point déduit Pd2 au moyen de la formule :

$$E' = E + Ec - Ec' + [Px' / (n-1) - Px / (n-1)] . \_1' . \sin(\_1) +$$

$$[Py'/(n-1) - Py/(n-1)] . \_1' . \cos(\_1) +$$

$$[S . \_1\_ - S' . \_1'\_] . 1 / [2. (n-1)] +$$

$$1 / [2. (n-1)] . [ C' . \_1'\_ . \cos[ 2 . (\_1' - a')] - C . \_1\_ . \cos[ 2 . (\_1 - a)] ],$$

avec Ec qui correspond à l'épaisseur au centre de la lentille mesurée 10 et Ec' qui correspond à l'épaisseur au centre de la lentille déduite 20. Ces épaisseurs au centre Ec,Ec' dépendent de la puissance optique sphérique S,S' de la lentille considérée. Le tableau suivant fournit un exemple de valeurs d'épaisseur au centre Ec,Ec' en fonction de la puissance optique sphérique S,S' de la lentille considérée.

| S,S' (Dioptries) | 0 | 1 | 2 | 3 | 4 | 5 | 6 | 8 | 10 |
|---|---|---|---|---|---|---|---|---|---|
| Ec,Ec' (mm) | 2 | 2,2 | 3,4 | 3,9 | 4,8 | 5,2 | 6 | 8 | 10 |

La déduction d'une épaisseur au centre Ec,Ec' par rapport à une puissance optique sphérique S,S' non fournie dans le tableau se fait par interpolation linéaire entre les deux valeurs de puissances optiques sphériques les plus proches.

Désormais, le logiciel intégrant le programme de calcul a non seulement déterminé les coordonnées spatiales _1',_1',h1' de chaque premier point déduit Pd1 mais aussi l'épaisseur déduite E' de la lentille déduite 20 entre chaque premier point déduit Pd1 et chaque second point déduit Pd2. Le logiciel déduit alors la troisième coordonnée h2' de chaque point considéré du deuxième ensemble de points déduits Pd2 en sommant l'épaisseur déduite E' de la lentille déduite 20 au niveau du point considéré et la troisième coordonnée h1' du premier point déduit Pd1 en regard du point considéré.

L'opticien peut ainsi récupérer les coordonnées _1',_1',h1',_2',_2',h2' des deux ensembles de points déduits Pd1,Pd2 décrivant le contour de la lentille déduite 20 sur chacune de ses faces optiques 24,25.

L'opticien, à partir de ces coordonnées _1',_1',h1',_2',_2',h2', vérifie alors tout d'abord qu'il sera possible de placer un biseau ou une rainure sur le chant des deux lentilles 10,20 lorsqu'elles seront détourées, puis il détermine la position de ce biseau ou de cette rainure sur le chant des lentilles 10,20 de sorte que l'esthétisme des lunettes soit idéal. Pour cela, l'opticien peut, par exemple, disposer d'une interface graphique représentant les contours des deux lentilles 10,20.

Une variante de méthode consiste à ce que le logiciel intégrant le programme de calcul détermine automatiquement la position optimale du biseau ou de la rainure sur le chant de chaque lentille 10,20.

La présente invention n'est nullement limitée au mode de réalisation décrit et représenté, mais l'homme du métier saura y apporter toute variante conforme à son esprit.

Ainsi, une première variante de méthode consiste en ce que les points mesurés et déduits appartiennent à deux lentilles destinées à être montées sur une monture de type percée.

Selon cette variante de méthode, il n'est plus nécessaire de palper une pluralité de points mesurés Pm1,Pm2 mais seulement quelques points précisément repérés par leurs coordonnées dans le plan général Pg de la lentille mesurée 10.

En effet, chaque lentille 10,20 est destinée à être percée en des points d'ancrage de coordonnées connues dans le plan général Pg,Pg' de chaque lentille 10,20. L'opticien fait alors correspondre à chaque point d'ancrage de la lentille mesurée 10 trois points mesurés Pm1,Pm2. Il fait tout d'abord correspondre à chaque point d'ancrage un premier point mesuré Pm1 et un second point mesuré Pm2 appartenant à chacune des deux faces optiques 14,15 de la lentille mesurée 10 et possédant les mêmes première et deuxième coordonnées _1,_1 que le point d'ancrage correspondant. Il fait par ailleurs correspondre un troisième point mesuré Pm1 appartenant à la face convexe 14 de la lentille mesurée 10. Ce point est situé à proximité immédiate du point d'ancrage, sur une droite passant par le point d'ancrage et parallèle à la ligne horizontale 13 de la lentille mesurée 10.

Ici également, la troisième coordonnée h1,h2 de chaque point des premier et deuxième ensemble de points mesurés Pm1,Pm2 est acquise par palpage et est transmise au logiciel de calcul. Ici toujours, le logiciel de calcul déduit l'épaisseur mesurée E entre chaque premier point mesuré Pm1 et chaque second point mesuré Pm2 en regard. Le logiciel calcule par la suite les coordonnées _1',_1',h1' de l'ensemble des premiers points déduits Pd1 de la face convexe 24 de la lentille déduite 20, puis l'épaisseur déduite E' entre chaque premier point déduit Pd1 et chaque second point déduit Pd2 en regard avec les mêmes formules mathématiques que précédemment.

Ces épaisseurs mesurée et déduite E,E' permettent au logiciel de calcul de vérifier la solidité des futures lunettes. Le logiciel peut par ailleurs vérifier que des branches des montures des lunettes pourront correctement pivoter sans que les chants des lentilles ne les gênent dans leur mouvement. Enfin, les coordonnées spatiales _1,_1,h1 des deux premiers points déduits de la face convexe 14 de la lentille mesurée 10 permettent au logiciel de déterminer le plan passant par le point d'ancrage considéré et normal à la droite passant par ces deux points. La connaissance de ce plan permet de percer correctement la lentille mesurée 10. La technique s'applique aussi à la lentille déduite 20.

Selon une autre variante de méthode dans laquelle les deux faces convexes 14,24 des deux lentilles sont rigoureusement identiques mais pas nécessairement sphériques et dans laquelle les deux faces concaves 15,25 des deux lentilles 10,20 présentent une surface sphérico-cylindrique, il est possible de déterminer directement les coordonnées spatiales _2',_2',h2' des seconds points déduits appartenant à la face concave 25 de la lentille déduite 20 sans calculer l'épaisseur déduite E' de la lentille déduite 20 en chaque point déduit Pd2. Ce calcul est réalisé à partir des coordonnées spatiales _2,_2,h2 des points du deuxième ensemble de points mesurés Pm2, des puissances surfaciques des faces concaves 15,25 des deux lentilles 10,20 et de l'épaisseur au centre Ec,Ec' des deux lentilles 10,20.

La première étape de cette variante de méthode consiste donc à déterminer les puissances surfaciques des faces concaves 15,25 des deux lentilles 10,20. Les puissances surfaciques de la face concave 15 de la lentille mesurée 10 sont déduites du palpage de la face concave 15 de la lentille mesurée 10. Elles peuvent dans certains cas directement être fournies à l'opticien dans une base de donnée. Les puissances surfaciques de la face concave 25 de la lentille déduite 20 peuvent quant à elles être déduites de deux manières différentes.

La première manière consiste à ce que l'opticien réalise une mesure optique de chacune des deux lentilles 10,20 afin d'en déterminer leurs puissances optiques S,S',C,C',Px,Px',Py,Py' avec, lorsqu'elles présentent une puissance optique cylindrique C,C', leur axe de cylindre a,a'. Disposant de toutes ces données et de l'indice n commun aux deux lentilles, le logiciel de calcul peut déterminer, en comparant les puissances optiques des deux lentilles 10,20 et en prenant en compte le fait que les faces convexes 14,24 des deux lentilles sont identiques, les puissances surfaciques sphérique Ps' et/ou cylindrique Pc' et/ou prismatiques Px',Py' de la face concave 25 de la lentille déduite 20.

La seconde manière consiste à ce que l'opticien réalise une mesure optique de la lentille déduite (20) afin d'en déterminer ses puissances optiques. Puis ayant palpé la face convexe 14 de la lentille mesurée 10, il déduit les puissances surfaciques de la face convexe 14 de la lentille mesurée 10. Les faces convexes des deux lentilles 10,20 étant supposées identiques, il en déduit les puissances surfaciques de la face convexe 24 de la lentille déduite 20. Connaissant les puissances optiques de la lentille déduites 20 et les puissances surfaciques de la face convexe 24 de la lentille déduite 20, il en déduit les puissances surfaciques sphérique Ps' et/ou cylindrique Pc' et/ou prismatiques Px',Py' de la face concave 25 de la lentille déduite 20.

A la suite de cette détermination, le logiciel de calcul détermine l'épaisseur au centre Ec de la lentille mesurée 10 et l'épaisseur au centre Ec' de la lentille déduite 20. Pour cela, le logiciel dispose de certaines valeurs d'épaisseurs au centre Ec,Ec' d'une lentille en fonction de sa puissance optique sphérique S,S'. Ces valeurs sont données dans le tableau suivant :

| S,S' (Dioptries) | -10 | -2 | -1 | 0 | 1 | 2 | 3 | 4 | 5 | 6 |
|---|---|---|---|---|---|---|---|---|---|---|
| Ec,Ec' (mm) | 1 | 1 | 1,5 | 2 | 2,2 | 3,4 | 3,9 | 4,8 | 5,2 | 6 |

La déduction d'une épaisseur au centre Ec,Ec' par rapport à une puissance optique sphérique S,S' non fournie dans le tableau se fait par interpolation linéaire entre les deux valeurs de puissances optiques sphériques les plus proches. Si la puissance optique sphérique de la lentille considérée est inférieure à 10 Dioptries, alors l'épaisseur au centre de la lentille considérée sera de 1 millimètre. Si la puissance optique sphérique de la lentille considérée est supérieure à 6 Dioptries, alors l'épaisseur au centre de la lentille considérée sera égale, en millimètre, à la valeur de la puissance optique sphérique exprimée en Dioptries.

On remarquera que ce tableau fournit des valeurs moyennes de l'épaisseur au centre Ec,Ec' qui, en toute rigueur, devraient aussi être fonction du couple formé par l'indice n et le diamètre _ de chaque lentille 10,20. Cependant, le diamètre _ et l'indice n des lentilles variant peu (l'indice d'une lentille est en général très proche de 1.6 et son diamètre avant détourage de 65 mm), les valeurs présentées ont une précision suffisante. Il serait possible d'affiner ces valeurs en connaissant l'indice n et le diamètre _,_' de chaque lentille 10,20.

Puis, selon une technique identique à celle précédemment décrite, le logiciel de calcul détermine les valeurs des deux premières coordonnées spatiales _2',_2' de chaque point du deuxième ensemble de points déduits (Pd2) en fonction d'au moins une des deux premières coordonnées _2,_2 de chaque second point mesuré Pm2 et du contour souhaité après détourage de la lentille déduite 20.

Enfin, le logiciel de calcul déduit la hauteur h2' de chaque second point déduit Pd2 à partir de la hauteur h2 du second point mesuré Pm2 homologue et des écarts de puissances surfaciques des faces concaves 15,25 des deux lentilles 10,20. Cette déduction est réalisée avec, par exemple, la formule suivante :

$$h'2 = h2 + R2' - R2 + (R2^2 - \rho2^2)^{1/2} - (R2'^2 - \rho2'^2)^{1/2} + Ec - Ec',$$

avec: $R2 = 1/(Ca_2 + Cb_2.\cos(2(\theta2 - a)))$,

$R2' = 1/(Ca_2' + Cb_2'.\cos(2(\theta2' - a')))$,

$Ca_2$ étant un terme correspondant à la puissance surfacique sphérique Ps de la lentille mesurée 10 et pouvant être déduit de la formule $Ca_2 = S/(1-n)$, $Cb_2$ étant un terme correspondant à la puissance surfacique cylindrique Pc de la lentille mesurée 10 et pouvant être déduit de la formule $Cb_2 = C/(1-n)$, $Ca_2'$ étant un terme correspondant à la puissance surfacique sphérique Ps' de la lentille déduite 20 et pouvant être déduit de la formule : $Ca_2' = Ca_2 + (S' - S)/(1-n)$, et $Cb_2'$ étant un terme correspondant à la puissance surfacique cylindrique Pc' de la lentille déduite 20 et pouvant être déduit de la formule : $Cb_2' = Cb_2 + (C' - C)/(1-n)$.

**Revendications**

1. Méthode d'acquisition d'au moins une caractéristique géométrique en deux ensembles de points homologues (Pm1,Pd1) de deux lentilles (10,20), l'une mesurée (10) et l'autre déduite (20), appartenant à une même paire de lunettes, dont un ensemble de points mesurés (Pm1) appartenant à la lentille mesurée (10) et un autre ensemble de points déduits (Pd1) appartenant à la lentille déduite (20), comportant les étapes de :

   a) palper la lentille mesurée (10) pour acquérir ladite au moins une caractéristique géométrique aux points de l'ensemble des points mesurés (Pm1),
   b) déduire ladite au moins une caractéristique géométrique aux points de l'ensemble de points déduits (Pd1), à partir, au moins, de ladite au moins une caractéristique géométrique palpée sur la lentille mesurée (10) et d'une puissance optique ou surfacique (R',S') d'au moins la lentille déduite (20).

2. Méthode selon la revendication 1 appliquée à l'acquisition des coordonnées spatiales (_1,_1,h1,_1',_1',h1') des deux ensembles de points (Pm1,Pd1) homologues, lesquels ensembles de points sont situés sur une première face optique (14,15,24,25) de chacune des deux lentilles, dans laquelle :

- on palpe, à l'étape a), la première face de la lentille mesurée (10) pour acquérir les trois coordonnées spatiales (_1,_1,h1) des points du premier ensemble de points mesurés (Pm1) dans un référentiel lié à la première face de la lentille mesurée (10),

- on déduit, à l'étape b), au moins une des trois coordonnées spatiales (_1',_1',h1') des points du premier ensemble de points déduits (Pd1) dans un référentiel lié à la première face de la lentille déduite (20), à partir, d'une part, d'au moins deux (_1,h1) des trois coordonnées spatiales (_1,_1,h1) des points du premier ensemble de points mesurés (Pm1) et, d'autre part, d'au moins une puissance surfacique de la première face optique d'au moins la lentille déduite (20).

3. Méthode selon la revendication précédente, dans laquelle le référentiel lié à la première face de la lentille mesurée (10) est homologue du référentiel lié à la première face de la lentille déduite (20).

4. Méthode selon l'une des revendications 2 et 3, dans laquelle la déduction de l'étape b) est réalisée à partir de la puissance surfacique sphérique et/ou cylindrique de la première face optique de la lentille déduite (20), avec, dans le cas d'une puissance cylindrique (C,C'), l'orientation de l'axe principal de la puissance cylindrique (a,a').

5. Méthode selon l'une des revendications 2 à 4, dans laquelle la déduction de l'étape b) est réalisée à partir de la puissance surfacique sphérique et/ou cylindrique de la première face optique de la lentille mesurée (10), avec, dans le cas d'une puissance cylindrique (C,C'), l'orientation de l'axe principal de la puissance cylindrique (a,a'), lesquelles puissances surfaciques et l'axe de cylindre sont déduits d'un palpage de la première face optique de la lentille mesurée (10).

6. Méthode selon l'une des revendications 2 à 5, comportant une étape d'acquisition d'au moins une puissance optique d'au moins la lentille déduite (20) et une étape de déduction de ladite au moins une puissance surfacique de la première face optique de la lentille déduite (20) à partir au moins de ladite au moins une puissance optique de la lentille déduite (20).

7. Méthode selon la revendication précédente, comportant une étape d'acquisition d'un indice (n) commun aux deux lentilles (10,20) et une étape d'acquisition d'au moins une puissance surfacique de la deuxième face optique de la lentille déduite (20), et dans laquelle ladite au moins une puissance surfacique de la première face optique de la lentille déduite (20) est déduite de ladite au moins une puissance optique de la lentille déduite (20), de ladite au moins une puissance surfacique de la deuxième face optique de la lentille déduite (20) et de l'indice (n) de la lentille déduite (20).

8. Méthode selon la revendication 6, comportant une étape d'acquisition d'un indice (n) commun aux deux lentilles (10,20) et dans laquelle ladite au moins une puissance surfacique de la première face optique de la lentille déduite (20) est déduite d'une part de la différence entre ladite au moins une puissance optique de la lentille déduite (20) et ladite au moins une puissance optique de la lentille mesurée (10), de leur indice (n) commun et de ladite au moins une puissance surfacique de la première face optique de la lentille mesurée (10).

9. Méthode selon l'une des revendications 2 à 8, dans laquelle préalablement à l'étape b), on définit deux des trois coordonnées spatiales (_1',_1',h1') des points du premier ensemble de points déduits (Pd1), dont une première (_1') et une deuxième (_1') coordonnées, et, à l'étape b), on déduit la troisième coordonnée (h1') des points du premier ensemble de points déduits (Pd1).

10. Méthode selon la revendication précédente, dans laquelle ladite troisième coordonnée (h1') des points du premier ensemble de points déduits (Pd1) est représentative de l'altitude des points du premier ensemble de points déduits (Pd1) suivant un axe (21) de la lentille déduite (20), les deux autres coordonnées (_1',_1') des points du premier ensemble de points déduits (Pd1) étant représentatives de la position des points du premier ensemble de points déduits (Pd1) dans un plan général (Pg') ne contenant pas ledit axe (21) de la lentille déduite (20).

11. Méthode selon l'une des revendications 2 à 10, dans laquelle préalablement à l'étape a), on définit deux des trois coordonnées spatiales (_1,_1,h1) des points du premier ensemble de points mesurés (Pm1), dont une première (_1) et une deuxième (_1) coordonnées, et, à l'étape a), on acquiert par palpage la troisième coordonnée (h1) des points du premier ensemble de points mesurés (Pm1).

12. Méthode selon la revendication précédente, dans laquelle ladite troisième coordonnée (h1) des points du premier ensemble de points mesurés (Pm1) est représentative de l'altitude des points du premier ensemble de points mesurés (Pm1) suivant un axe (11) de la lentille mesurée, les deux autres coordonnées (_1,_1) des points du premier ensemble de points mesurés (Pm1) étant représentatives de la position des points du premier ensemble de points mesurés (Pm1) dans un plan général (Pg) ne contenant pas ledit axe (11) de la lentille mesurée (10).

13. Méthode selon les revendications 10 et 12, dans laquelle, les premières faces des deux lentilles (10,20) étant globalement sphériques selon un rayon moyen (R,R'), les deux lentilles présentant un centre optique (Co,Co'), l'axe (11,21) de chacune des deux lentilles (10,20) correspondant à l'axe optique (11,21) qui est défini comme étant l'axe passant par le centre optique (Co,Co') et normal à la première face optique de la lentille (10,20), le plan général (Pg,Pg') de chaque lentille (10,20) étant orthogonal à l'axe optique et passant par le centre optique (Co,Co') de la lentille (10,20), la lentille mesurée (10) et la lentille déduite (20) présentant un indice (n) commun, la déduction, à l'étape b), de la troisième coordonnée (h1') des points du premier ensemble de points déduits (Pd1) de la première face de la lentille déduite (20) est réalisée au moyen de la formule :

$$h1' = h1 + (R\_ - \_1\_)^{1/2} - (R'\_ - \_1'\_)^{1/2} \,,$$

h1' étant la troisième coordonnée du premier point déduit (Pd1) appartenant à la première face de la lentille déduite (20),

h1 étant la troisième coordonnée du premier point mesuré (Pm1) appartenant à la première face de la lentille mesurée (10),

_1' étant la première coordonnée du premier point déduit (Pd1) définie comme étant la distance entre l'axe optique (21) de la première face optique de la lentille déduite (20) et le point déduit (Pd1),

_1 étant la première coordonnée du premier point mesuré (Pm1) définie comme étant la distance entre l'axe optique (11) de la première face optique de la lentille mesurée (10) et le premier point mesuré (Pm1),

R étant le rayon de courbure moyen de la première face optique de la lentille mesurée (10), et

R' étant le rayon de courbure moyen de la première face optique de la lentille déduite (20).

14. Méthode selon l'une des revendications 2 à 13 comportant les étapes supplémentaires de :

- palper la deuxième face de la lentille mesurée (10) pour acquérir les trois coordonnées spatiales (_2,_2,h2) des points d'un deuxième ensemble de points mesurés (Pm2) en regard des points du premier ensemble de points mesurés (Pm1) dans un référentiel lié à la première face de la lentille mesurée (10),

- déduire l'épaisseur mesurée (E) entre les points du premier ensemble de points mesurés (Pm1) et les points du deuxième ensemble de points mesurés (Pm2) de la lentille mesurée (10),

- déduire l'épaisseur déduite (E') de la lentille déduite (20) entre d'une part, les points du premier ensemble de points déduits (Pd1) et, d'autre part, les points d'un deuxième ensemble de points déduits (Pd2) situés sur la deuxième face de la lentille déduite (20) en regard des points du premier ensemble de points déduits (Pd1), à partir, au moins, de l'épaisseur mesurée (E), des première et deuxième coordonnées spatiales (_1,_1) des points du premier ensemble de points mesurés (Pm1), de l'indice (n) des deux lentilles (10,20) et d'au moins une caractéristique optique (S,S') des deux lentilles (10,20).

15. Méthode selon la revendication précédente, comportant une étape d'acquisition des caractéristiques optiques des deux lentilles (10,20) dont au moins une puissance optique sphérique (S,S') et/ou cylindrique (C,C') et/ou prismatique (Px,Px',Py,Py') avec, dans le cas, d'une puissance cylindrique (C,C'), l'orientation de l'axe principal de la puissance cylindrique (C,C').

16. Méthode selon l'une des revendications 14 et 15, comportant une étape de déduction des coordonnées spatiales (_2',_2',h2') des points du deuxième ensemble de points déduits (Pd2), à partir, au moins, de l'épaisseur déduite (E') entre les points du premier ensemble de points déduits (Pd1) et les points du deuxième ensemble de points déduits (Pd2), et des coordonnées spatiales (_1',_1',h1') des points du premier ensemble de points déduits (Pd1).

17. Méthode selon l'une des revendications 11 et 13, dans laquelle, les deux lentilles (10,20) présentant un centre optique (Co,Co') et une ligne d'horizon (13,23) définissant des référentiels optiques, les points du premier ensemble de points mesurés (Pm1) et du premier ensemble de points déduits (Pd1) étant des points associés à la monture, on repère les référentiels optiques des deux lentilles (10,20), on positionne la monture dans ledit plan général (Pg,Pg') de chaque lentille (10,20) de manière à centrer les lentilles en regard du point pupillaire par rapport à la monture et on en déduit les premières et deuxièmes coordonnées (_1,_1,_1',_1') des points du premier ensemble de points mesurés (Pm1) et du premier ensemble de points déduits (Pd1) homologues.

18. Méthode selon l'une des revendications 2 à 17, dans laquelle les deux lentilles (10,20) de la paire de lunettes étant destinées à être détourées selon un contour de forme et de position connues en projection dans le plan général (Pg,Pg') de chacune des deux lentilles (10,20),

  - on palpe, à l'étape a), un premier ensemble de points mesurés (Pm1) sur la première face de la lentille mesurée (10) décrivant ledit contour pour acquérir la troisième coordonnée (h1) des points de l'ensemble des points mesurés (Pm1),
  - on déduit, à l'étape b), les première et deuxième coordonnées (_1',_1') des points du premier ensemble de points déduits (Pd1) à partir d'au moins une des deux premières coordonnées (_1,_1) de chaque point du premier ensemble de points mesurés (Pm1) homologues et de la forme et de la position en projection dans le plan général (Pg') du contour de la lentille déduite (20),
  - on déduit, à l'étape b), la troisième coordonnée (h1') de chaque point du premier ensemble de points déduits (Pd1) de la lentille déduite (20).

19. Méthode selon la revendication précédente, comportant les étapes supplémentaires de :

  - palper la deuxième face optique de la lentille mesurée (10) afin d'acquérir les coordonnées spatiales (_2,_2,h2) des points d'un deuxième ensemble de points mesurés (Pm2) situés en regard des points du premier ensemble de points mesurés (Pm1) de la première face optique de la lentille mesurée (10),
  - déduire l'épaisseur mesurée (E) entre chaque point du premier ensemble de points mesurés (Pm1) et chaque point du deuxième ensemble de points mesurés (Pm2) de la lentille mesurée (10) en regard,
  - déduire l'épaisseur déduite (E') de la lentille déduite (20) entre chaque point du premier ensemble de points déduits (Pd1) et chaque point d'un second ensemble de points déduits (Pd2) situés en regard des points du premier ensemble de points déduits (Pd1) de la première face optique de la lentille déduite (20), à partir, au moins, de l'épaisseur mesurée (E), des première et deuxième coordonnées spatiales (_1,_1,_1',_1') des points du premier ensemble de points mesurés (Pm1) et du premier ensemble de points déduits (Pd1) et, au moins, de la puissance surfacique sphérique (S,S') de chacune des deux lentilles (10,20).

20. Méthode selon l'une des revendications 18 et 19, dans laquelle, les deux lentilles (10,20) présentant un centre optique (Co,Co') et une ligne d'horizon (13,23), l'axe (11,21) de la lentille correspondant à l'axe optique (11,21), une ligne verticale (12,22) étant définie comme étant la droite perpendiculaire à la ligne d'horizon (13,23) et à l'axe optique (11,21) de la première face optique de la lentille (10,20), la déduction des première et deuxième coordonnées (_1',_1') de chaque point considéré du premier ensemble de points déduits (Pd1) est réalisée de telle sorte que chaque point du premier ensemble de points déduits (Pd1) de la lentille déduite (20) soit situé,

  - d'une part, dans un demi-plan qui contient l'axe optique (21) de la première face optique de la lentille déduite (20), qui part de cet axe optique (21) et qui, si les deux lentilles (10,20) sont superposées avec leur centre optique (Co,Co') et leur ligne d'horizon (13,23) confondus, est symétrique, par rapport à la ligne verticale (12,22), du demi plan contenant le point du premier ensemble de points mesurés (Pm1) homologue du point considéré et l'axe optique (11) de la première face optique de la lentille mesurée (10) et qui part de cet axe optique (11),
  - d'autre part, à une distance (_1') de l'axe optique (21) de la première face optique de la lentille déduite (20) qui est fonction, dans le plan général (Pg') de la lentille déduite (20), de la forme et de la position du contour de la lentille déduite (20) et du demi plan dans lequel le point considéré de l'ensemble de points déduits (Pd1) est situé.

21. Méthode selon l'une des revendications 2 à 17, dans laquelle les deux lentilles (10,20) de la paire de lunettes étant destinées à être percées en des points d'ancrage pour leur montage sur une monture du type sans cercle et ces points d'ancrage ayant des première et deuxième coordonnées prédéfinies dans le plan général (Pg), les premiers ensembles de points mesurés (Pm1) et déduits (Pd1) consistent en ces points d'ancrage.

22. Méthode selon la revendication précédente, dans laquelle les premiers ensembles de points mesurés (Pm1) et déduits (Pd1) consistent, pour chaque point d'ancrage, en au moins deux points distincts situés à proximité de ce point d'ancrage sur les premières faces des deux lentilles (10,20), et avec lesquels on calcule, en fonction de leurs coordonnées spatiales (_1,_1,h1,_1',_1',h1') obtenues respectivement par palpage et déduction, les coordonnées du plan passant par ce point d'ancrage et normal à la droite passant par les deux points distincts.

**23.** Méthode selon la revendication précédente dans sa dépendance de la revendication 14, dans laquelle on calcule l'épaisseur déduite (E') de la lentille déduite (20) en chaque point d'ancrage.

**24.** Méthode selon l'une des revendications précédentes, dans laquelle dans la déduction de l'étape b), il est tenu compte des éventuelles puissances surfaciques cylindriques des faces concernées des deux lentilles (10,20).

**25.** Méthode selon la revendication 1 appliquée à l'acquisition des épaisseurs de deux lentilles (10,20) en deux ensembles de points homologues (P m 1 , P d 1 ) dans laquelle :

- on palpe, à l'étape a), les deux faces de la lentille mesurée (10) pour acquérir l'épaisseur mesurée (E) entre un premier ensemble de points mesurés (Pm1) sur une première face de la lentille mesurée (10) et un deuxième ensemble de points mesurés (Pm2) situé sur une deuxième face de la lentille mesurée (10), en regard du premier ensemble de points mesurés (Pm1), et
- on déduit, à l'étape b), l'épaisseur déduite (E') de la lentille déduite (20) entre un premier ensemble de points déduits (Pd1) sur la première face de la lentille déduite (20) et un deuxième ensemble de points déduits (Pd2) sur la deuxième face de la lentille déduite (20) en regard du premier ensemble de points déduits (Pd1), à partir, d'au moins l'épaisseur mesurée (E), de l'indice (n) des deux lentilles (10,20) et de la différence des puissances optiques des deux lentilles (10,20).

**26.** Méthode selon le revendication précédente, comportant une étape de mesure optique des deux lentilles (10,20) et une étape de déduction des puissance optiques des deux lentilles (10,20), dont au moins une puissance optique sphérique (S,S') et/ou cylindrique (C,C') et/ou prismatique (Px,Px',Py,Py') avec, dans le cas, d'une puissance cylindrique (C,C'), l'orientation de l'axe principal de la puissance cylindrique (C,C').

**27.** Dispositif pour la mise en oeuvre de la méthode selon l'une des revendications précédentes comprenant des moyens de mesure aptes à repérer les référentiels optiques des deux lentilles (10,20), des moyens de palpage de la lentille mesurée (10), des moyens d'acquisition des puissances optiques des deux lentilles (10,20), un système électronique et/ou informatique conçu pour exécuter les déductions de l'étape b).

**Patentansprüche**

**1.** Verfahren zum Erwerben von mindestens einer geometrischen Kenngröße in zwei Gruppen von homologen Punkten (Pm1, Pd1) von zwei Linsen (10, 20), die eine eine gemessene (10) und die andere eine abgeleitete (20) Linse, die zu einer gleichen Brille gehören, wobei eine Gruppe von gemessenen Punkten (Pm1) zu der gemessenen Linse (10) gehört und eine andere Gruppe von abgeleiteten Punkten (Pd1) zu der abgeleiteten Linse (20) gehört, umfassend die Schritte des:

a) Abtastens der gemessenen Linse (10), um die mindestens eine geometrische Kenngröße an den Punkten der Gruppe der gemessenen Punkte (Pm1) zu erwerben,
b) Ableitens der mindestens einen geometrischen Kenngröße an den Punkten der Gruppe der abgeleiteten Punkte (Pd1) ausgehend von mindestens der mindestens einen geometrischen Kenngröße, die auf der gemessenen Linse (10) abgetastet wird, und einer optischen Leistung oder Flächenleistung (R', S') von mindestens der abgeleiteten Linse (20).

**2.** Verfahren nach Anspruch 1, das auf das Erwerben der Raumkoordinaten (_1, _1, h1, _1', _1', h1') der zwei Gruppen von homologen Punkten (Pm1, Pd1) angewendet wird, wobei die Gruppen von Punkten auf einer ersten optischen Fläche (14, 15, 24, 25) von jeder der zwei Linsen angeordnet sind, wobei:

- in dem Schritt a) die erste Fläche der gemessenen Linse (10) abgetastet wird, um die drei Raumkoordinaten (_1, _1, h1) der Punkte der ersten Gruppe von gemessenen Punkten (Pm1) in einem Bezugssystem zu erwerben, das mit der ersten Fläche der gemessenen Linse (10) verbunden ist,
- in dem Schritt b) mindestens eine der drei Raumkoordinaten (_1', _1', h1') der Punkte der ersten Gruppe von abgeleiteten Punkten (Pd1) in einem Bezugssystem, das mit der ersten Fläche der abgeleiteten Linse (20) verbunden ist, einerseits ausgehend von mindestens zwei (_1, h1) der drei Raumkoordinaten (_1, _1, h1) der Punkte der ersten Gruppe von gemessenen Punkten (Pm1) und andererseits von mindestens einer Flächenleistung der ersten optischen Fläche von mindestens der abgeleiteten Linse (20) abgeleitet wird.

3. Verfahren nach dem vorhergehenden Anspruch, wobei das Bezugssystem, das mit der ersten Fläche der gemessenen Linse (10) verbunden ist, zu dem Bezugssystem homolog ist, das mit der ersten Fläche der abgeleiteten Linse (20) verbunden ist.

4. Verfahren nach einem der Ansprüche 2 und 3, wobei das Ableiten des Schrittes b) ausgehend von der sphärischen und/oder zylindrischen Flächenleistung der ersten optischen Fläche der abgeleiteten Linse (20) mit der Ausrichtung der Hauptachse der zylindrischen Leistung (a, a') im Fall von einer zylindrischen Leistung (C, C') durchgeführt wird.

5. Verfahren nach einem der Ansprüche 2 bis 4, wobei das Ableiten des Schrittes b) ausgehend von der sphärischen und/oder zylindrischen Flächenleistung der ersten optischen Fläche der gemessenen Linse (10) mit der Ausrichtung der Hauptachse der zylindrischen Leistung (a, a') im Fall von einer zylindrischen Leistung (C, C') durchgeführt wird, wobei die Flächenleistungen und die zylindrische Achse durch ein Abtasten der ersten optischen Fläche der gemessenen Linse (10) abgeleitet werden.

6. Verfahren nach einem der Ansprüche 2 bis 5, umfassend einen Schritt des Erwerbens von mindestens einer optischen Leistung von mindestens der abgeleiteten Linse (20) und einen Schritt des Ableitens der mindestens einen Flächenleistung der ersten optischen Fläche der abgeleiteten Linse (20) ausgehend von mindestens der mindestens einen optischen Leistung der abgeleiteten Linse (20).

7. Verfahren nach dem vorhergehenden Anspruch, umfassend einen Schritt des Erwerbens eines Indexes (n), der beiden Linsen (10, 20) gemeinsam ist, und einen Schritt des Erwerbens von mindestens einer Flächenleistung der zweiten optischen Fläche der abgeleiteten Linse (20) und bei dem die mindestens eine Flächenleistung der ersten optischen Fläche der abgeleiteten Linse (20) von der mindestens einen optischen Leistung der abgeleiteten Linse (20), der mindestens einen Flächenleistung der zweiten optischen Fläche der abgeleiteten Linse (20) und dem Index (n) der abgeleiteten Linse (20) abgeleitet wird.

8. Verfahren nach Anspruch 6, umfassend einen Schritt des Erwerbens eines Indexes (n), der beiden Linsen (10, 20) gemeinsam ist, und bei dem die mindestens eine Flächenleistung der ersten optischen Fläche der abgeleiteten Linse (20) einerseits von der Differenz zwischen der mindestens einen optischen Leistung der abgeleiteten Linse (20) und der mindestens einen optischen Leistung der gemessenen Linse (10), von ihrem gemeinsamen Index (n) und von der mindestens einen Flächenleistung der ersten optischen Fläche der gemessenen Linse (10) abgeleitet wird.

9. Verfahren nach einem der Ansprüche 2 bis 8, wobei vor dem Schritt b) zwei der drei Raumkoordinaten (_1', _1', h1') der Punkte der ersten Gruppe von abgeleiteten Punkten (Pd1) , eine erste (_1') und eine zweite (_1') Koordinate davon, definiert werden, und in dem Schritt b) die dritte Koordinate (h1') der Punkte der ersten Gruppe von abgeleiteten Punkten (Pd1) abgeleitet wird.

10. Verfahren nach dem vorhergehenden Anspruch, wobei die dritte Koordinate (h1') der Punkte der ersten Gruppe von abgeleiteten Punkten (Pd1) für die Höhe der Punkte der ersten Gruppe von abgeleiteten Punkten (Pd1) entlang einer Achse (21) der abgeleiteten Linse (20) repräsentativ ist, wobei die zwei anderen Koordinaten (_1', _1') der Punkte der ersten Gruppe von abgeleiteten Punkten (Pd1) für die Position der Punkte der ersten Gruppe von abgeleiteten Punkten (Pd1) in einer allgemeinen Ebene (Pg') repräsentativ sind, die nicht die Achse (21) der abgeleiteten Linse (20) enthält.

11. Verfahren nach einem der Ansprüche 2 bis 10, wobei vor dem Schritt a) zwei der drei Raumkoordinaten (_1, _1, h1) der Punkte der ersten Gruppe von gemessenen Punkten (Pm1) , eine erste (_1) und eine zweite (_1) Koordinate davon, definiert werden, und in dem Schritt a) die dritte Koordinate (h1) der Punkte der ersten Gruppe von gemessenen Punkten (Pm1) durch Abtasten erworben wird.

12. Verfahren nach dem vorhergehenden Anspruch, wobei die dritte Koordinate (h1) der Punkte der ersten Gruppe von gemessenen Punkten (Pm1) für die Höhe der Punkte der ersten Gruppe von gemessenen Punkten (Pm1) entlang einer Achse (11) der gemessenen Linse repräsentativ ist, wobei die zwei anderen Koordinaten (_1, _1) der Punkte der ersten Gruppe von gemessenen Punkten (Pm1) für die Position der Punkte der ersten Gruppe von gemessenen Punkten (Pm1) in einer allgemeinen Ebene (Pg) repräsentativ sind, die nicht die Achse (11) der gemessenen Linse (10) enthält.

13. Verfahren nach den Ansprüchen 10 und 12, wobei, nachdem die ersten Flächen der zwei Linsen (10, 20) im Wesentlichen nach einem mittleren Radius (R, R') sphärisch sind, die zwei Linsen einen optischen Mittelpunkt (Co, Co') aufweisen, die Achse (11, 21) von jeder der zwei Linsen (10, 20) der optischen Achse (11, 21) entspricht, die als die Achse definiert ist, die durch den optischen Mittelpunkt (Co, Co') geht und senkrecht zu der ersten optischen Fläche der Linse (10, 20) liegt, die allgemeine Ebene (Pg, Pg') von jeder Linse (10, 20) senkrecht zu der optischen Achse ist und durch den optischen Mittelpunkt (Co, Co') der Linse (10, 20) geht, die gemessene Linse (10) und die abgeleitete Linse (20) einen gemeinsamen Index (n) aufweisen, das Ableiten in dem Schritt b) der dritten Koordinate (h1') der Punkte der ersten Gruppe von abgeleiteten Punkten (Pd1) der ersten Fläche der abgeleiteten Linse (20) mittels der folgenden Formel durchgeführt wird:

$$h1' = h1 + (R\_ - \_1\_)^{1/2} - (R'\_ - \_1'\_)^{1/2},$$

wobei h1' die dritte Koordinate des ersten abgeleiteten Punktes (Pd1) ist, der zu der ersten Fläche der abgeleiteten Linse (20) gehört,
wobei h1 die dritte Koordinate des ersten gemessenen Punktes (Pm1) ist, der zu der ersten Fläche der gemessenen Linse (10) gehört,
wobei \_1' die erste Koordinate des ersten abgeleiteten Punktes (Pd1) ist, die als der Abstand zwischen der optischen Achse (21) der ersten optischen Fläche der abgeleiteten Linse (20) und dem abgeleiteten Punkt (Pd1) definiert ist,
wobei \_1 die erste Koordinate des ersten gemessenen Punktes (Pm1) ist, die als der Abstand zwischen der optischen Achse (11) der ersten optischen Fläche der gemessenen Linse (10) und dem ersten gemessenen Punkt (Pm1) definiert ist,
wobei R der mittlere Krümmungsradius der ersten optischen Fläche der gemessenen Linse (10) ist und
wobei R' der mittlere Krümmungsradius der ersten optischen Fläche der abgeleiteten Linse (20) ist.

14. Verfahren nach einem der Ansprüche 2 bis 13, umfassend die zusätzlichen Schritte des:

- Abtastens der zweiten Fläche der gemessenen Linse (10), um die drei Raumkoordinaten (\_2, \_2, h2) der Punkte einer zweiten Gruppe von gemessenen Punkten (Pm2) gegenüber von den Punkten der ersten Gruppe von gemessenen Punkten (Pm1) in einem Bezugssystem zu erwerben, das mit der ersten Fläche der gemessenen Linse (10) verbunden ist,
- Ableitens der gemessenen Dicke (E) zwischen den Punkten der ersten Gruppe von gemessenen Punkten (Pm1) und den Punkten der zweiten Gruppe von gemessenen Punkten (Pm2) der gemessenen Linse (10),
- Ableitens der abgeleiteten Dicke (E') der abgeleiteten Linse (20) zwischen einerseits den Punkten der ersten Gruppe von abgeleiteten Punkten (Pd1) und andererseits den Punkten einer zweiten Gruppe von abgeleiteten Punkten (Pd2), die auf der zweiten Fläche der abgeleiteten Linse (20) gegenüber von den Punkten der ersten Gruppe von abgeleiteten Punkten (Pd1) angeordnet sind, ausgehend von mindestens der gemessenen Dicke (E) der ersten und der zweiten Raumkoordinate (\_1, \_1) der Punkte der ersten Gruppe von gemessenen Punkten (Pm1) , des Indexes (n) der zwei Linsen (10, 20) und von mindestens einer optischen Eigenschaft (S, S') der zwei Linsen (10, 20).

15. Verfahren nach dem vorhergehenden Anspruch, umfassend einen Schritt des Erwerbens der optischen Eigenschaften der zwei Linsen (10, 20), darunter mindestens eine sphärische (S, S') und/oder zylindrische (C, C') und/oder prismatische (Px, Px', Py, Py') optische Leistung mit, in dem Fall von einer zylindrischen Leistung (C, C'), der Ausrichtung der Hauptachse der zylindrischen Leistung (C, C').

16. Verfahren nach einem der Ansprüche 14 und 15, umfassend einen Schritt des Ableitens der Raumkoordinaten (\_2'\_2', h2') der Punkte der zweiten Gruppe von abgeleiteten Punkten (Pd2), ausgehend von mindestens der abgeleiteten Dicke (E') zwischen den Punkten der ersten Gruppe von abgeleiteten Punkten (Pd1) und den Punkten der zweiten Gruppe von abgeleiteten Punkten (Pd2), und der Raumkoordinaten (\_1', \_1', h1') der Punkte der ersten Gruppe von abgeleiteten Punkten (Pd1).

17. Verfahren nach den Ansprüchen 11 und 13, wobei, nachdem die zwei Linsen (10, 20) einen optischen Mittelpunkt (Co, Co') und eine Horizontlinie (13, 23) aufweisen, die die optischen Bezugssysteme definieren, die Punkte der ersten Gruppe von gemessenen Punkten (Pm1) und der ersten Gruppe von abgeleiteten Punkten (Pd1) Punkte sind, die mit der Fassung verbunden sind, die optischen Bezugssysteme der zwei Linsen (10, 20) erfasst werden, die Fassung in der allgemeinen Ebene (Pg, Pg') von jeder Linse (10, 20) derart angeordnet wird, um die Linsen gegenüber von dem Pupillenpunkt in Bezug auf die Fassung zu zentrieren, und daraus die erste und die zweite Koordinate (_1, _1, _1', _1') der Punkte der ersten Gruppe von gemessenen Punkten (Pm1) und der ersten Gruppe von homologen abgeleiteten Punkten (Pd1) abgeleitet wird.

18. Verfahren nach einem der Ansprüche 2 bis 17, wobei die zwei Linsen (10, 20) der Brille dazu bestimmt sind, entlang einer bekannten Form- und Positionskontur in Projektion in der allgemeinen Ebene (Pg, Pg') von jeder der zwei Linsen (10, 20) formgefräst zu werden,

- in dem Schritt a) eine erste Gruppe von gemessenen Punkten (Pm1) auf der ersten Fläche der gemessenen Linse (10) abgetastet wird, die die Kontur beschreibt, um die dritte Koordinate (h1) der Punkte der Gruppe der gemessenen Punkte (Pm1) zu erwerben,
- in dem Schritt b) die erste und die zweite Koordinate (_1', _1') der Punkte der ersten Gruppe von abgeleiteten Punkten (Pd1) ausgehend von mindestens einer der zwei ersten Koordinaten (_1, _1) von jedem Punkt der ersten Gruppe von homologen gemessenen Punkten (Pm1) und von der Form und der Position in Projektion in der allgemeinen Ebene (Pg') der Kontur der abgeleiteten Linse (20) abgeleitet werden,
- in dem Schritt b) die dritte Koordinate (h1') von jedem Punkt der ersten Gruppe von abgeleiteten Punkten (Pd1) der abgeleiteten Linse (20) abgeleitet wird.

19. Verfahren nach dem vorhergehenden Anspruch, umfassend die zusätzlichen Schritte des:

- Abtastens der zweiten optischen Fläche der gemessenen Linse (10), um die Raumkoordinaten (_2,_2, h2) der Punkte einer zweiten Gruppe von gemessenen Punkten (Pm2), die gegenüber von den Punkten der ersten Gruppe von gemessenen Punkten (Pm1) der ersten optischen Fläche der gemessenen Linse (10) angeordnet sind, zu erwerben,
- Ableitens der gemessenen Dicke (E) zwischen jedem Punkt der ersten Gruppe von gemessenen Punkten (Pm1) und jedem Punkt der zweiten Gruppe von gemessenen Punkten (Pm2) der gegenüberliegenden gemessenen Linse (10),
- Ableitens der abgeleiteten Dicke (E') der abgeleiteten Linse (20) zwischen jedem Punkt der ersten Gruppe von abgeleiteten Punkten (Pd1) und jedem Punkt einer zweiten Gruppe von abgeleiteten Punkten (Pd2), die gegenüber von den Punkten der ersten Gruppe von abgeleiteten Punkten (Pd1) der ersten optischen Fläche der abgeleiteten Linse (20) angeordnet sind, ausgehend von mindestens der gemessenen Dicke (E) der ersten und der zweiten Raumkoordinate (_1, _1, _1', _1') der Punkte der ersten Gruppe von gemessenen Punkten (Pm1) und der ersten Gruppe von abgeleiteten Punkten (Pd1) und mindestens von der sphärischen Flächenleistung (S, S') von jeder der zwei Linsen (10, 20).

20. Verfahren nach einem der Ansprüche 18 und 19, wobei, nachdem die zwei Linsen (10, 20) einen optischen Mittelpunkt (Co, Co') und eine Horizontlinie (13, 23) aufweisen, die Achse (11, 21) der Linse der optischen Achse (11, 21) entspricht, eine vertikale Linie (12, 22) als die Gerade definiert ist, die senkrecht zu der Horizontlinie (13, 23) und der optischen Achse (11, 21) der ersten optischen Fläche der Linse (10, 20) ist, das Ableiten der ersten und zweiten Koordinate (_1', _1') von jedem betrachteten Punkt der ersten Gruppe von abgeleiteten Punkten (Pd1) derart durchgeführt wird, dass jeder Punkt der ersten Gruppe von abgeleiteten Punkten (Pd1) der abgeleiteten Linse (20)

- einerseits in einer Halbebene angeordnet ist, die die optische Achse (21) der ersten optischen Fläche der abgeleiteten Linse (20) enthält, die von dieser optischen Achse (21) abgeht und die, wenn die zwei Linsen (10, 20) mit ihrem optischen Mittelpunkt (Co, Co') und ihrer Horizontlinie (13, 23) zusammengenommen überlagert werden, gegenüber der vertikalen Linie (12, 22) der Halbebene symmetrisch ist, die den Punkt der ersten Gruppe von gemessenen Punkten (Pm1), der homolog zu dem betrachteten Punkt ist, und die optische Achse (11) der ersten optischen Fläche der gemessenen Linse (10) enthält und die von dieser optischen Achse (11) abgeht,
- andererseits in einem Abstand (_1') von der optischen Achse (21) der ersten optischen Fläche der abgeleiteten Linse (20) angeordnet ist, der in der allgemeinen Ebene (Pg') von der abgeleiteten Linse (20), der Form und der Position der Kontur der abgeleiteten Linse (20) und von der Halbebene, in der der betrachtete Punkt der Gruppe von abgeleiteten Punkten (Pd1) angeordnet ist, abhängig ist.

21. Verfahren nach einem der Ansprüche 2 bis 17, wobei, nachdem die zwei Linsen (10, 20) der Brille dazu bestimmt sind, für ihre Montage auf einer Fassung vom randlosen Typ an Verankerungspunkten durchbohrt zu werden und diese Verankerungspunkte eine erste und zweite vorbestimmte Koordinate in der allgemeinen Ebene (Pg) aufweisen, die ersten Gruppen von gemessenen (Pm1) und abgeleiteten (Pd1) Punkten in diesen Verankerungspunkten bestehen.

**22.** Verfahren nach dem vorhergehenden Anspruch, wobei die ersten Gruppen von gemessenen (Pm1) und abgeleiteten (Pd1) Punkten für jeden Verankerungspunkt in mindestens zwei verschiedenen Punkten bestehen, die in der Nähe dieses Verankerungspunktes auf den ersten Flächen der zwei Linsen (10, 20) angeordnet sind und mit denen in Abhängigkeit von ihren Raumkoordinaten (_1, _1, h1, _1', _1', h1'), die jeweils durch Abtasten und Ableiten erhalten werden, die Koordinaten der Ebene berechnet werden, die durch diesen Verankerungspunkt geht und senkrecht zu der Geraden liegt, die durch die zwei verschiedenen Punkte geht.

**23.** Verfahren nach dem vorhergehenden Anspruch in seiner Abhängigkeit vom Anspruch 14, wobei die abgeleitete Dicke (E') der abgeleiteten Linse (20) an jedem Verankerungspunkt berechnet wird.

**24.** Verfahren nach einem der vorhergehenden Ansprüche, wobei beim Ableiten des Schrittes b) die eventuellen zylindrischen Flächenleistungen der betreffenden Flächen der zwei Linsen (10, 20) berücksichtigt werden.

**25.** Verfahren nach Anspruch 1, das auf das Erwerben der Dicken von zwei Linsen (10, 20) in zwei Gruppen von homologen Punkten (Pm1, Pd1) angewendet wird, wobei:

- in dem Schritt a) die zwei Flächen der gemessenen Linse (10) abgetastet werden, um die gemessene Dicke (E) zwischen einer ersten Gruppe von gemessenen Punkten (Pm1) auf einer ersten Fläche der gemessenen Linse (10) und einer zweiten Gruppe von gemessenen Punkten (Pm2), die auf einer zweiten Fläche der gemessenen Linse (10) gegenüber von der ersten Gruppe von gemessenen Punkten (Pm1) angeordnet ist, zu erwerben und

- in dem Schritt b) die abgeleitete Dicke (E') der abgeleiteten Linse (20) zwischen einer ersten Gruppe von abgeleiteten Punkten (Pd1) auf der ersten Fläche der abgeleiteten Linse (20) und einer zweiten Gruppe von abgeleiteten Punkten (Pd2) auf der zweiten Fläche der abgeleiteten Linse (20) gegenüber von der ersten Gruppe von abgeleiteten Punkten (Pd1) ausgehend von mindestens der gemessenen Dicke (E), des Indexes (n) der zwei Linsen (10, 20) und von dem Unterschied der optischen Leistungen der zwei Linsen (10, 20) abgeleitet wird.

**26.** Verfahren nach dem vorhergehenden Anspruch, umfassend einen Schritt des optischen Messens der zwei Linsen (10, 20) und einen Schritt des Ableitens der optischen Leistungen der zwei Linsen , (10, 20), darunter mindestens eine sphärische (S, S') und/oder zylindrische (C, C') und/oder prismatische (Px, Px', Py, Py') optische Leistung mit, in dem Fall von einer zylindrischen Leistung (C, C'), der Ausrichtung der Hauptachse der zylindrischen Leistung (C, C').

**27.** Vorrichtung zum Umsetzen des Verfahrens nach einem der vorhergehenden Ansprüche, umfassend Mittel zum Messen, die geeignet sind, die optischen Bezugssysteme der zwei Linsen (10, 20) zu erfassen, Mittel zum Abtasten der gemessenen Linse (10), Mittel zum Erwerben der optischen Leistungen der zwei Linsen (10, 20), ein elektronisches und/oder datenverarbeitendes System, das konzipiert ist, um die Ableitungen des Schrittes b) auszuführen.

**Claims**

**1.** Method for acquiring at least one geometric characteristic at two sets of homologous points (Pm1,Pd1) of two lenses (10,20), one measured (10) and the other deduced (20), belonging to a given pair of spectacles, a set of measured points (Pm1) belonging to the measured lens (10) and another set of deduced points (Pd1) belonging to the deduced lens (20), this method including the steps of:

a) surface profiling the measured lens (10) in order to acquire said at least one geometric characteristic at the points of the set of the measured points (Pm1); and

b) deducing said at least one geometric characteristic at the points of the set of deduced points (Pd1), from, at least, said at least one geometric characteristic obtained by surface profilometry on the measured lens (10), and a surficial or optical power (R',S') of at least the deduced lens (20).

**2.** Method according to Claim 1 applied to the acquisition of the spatial coordinates (_1,_1, h1,_1',_1',h1') of the two sets of homologous points (Pm1,Pd1), which sets of points are located on a first optical face (14,15,24,25) of each of the two lenses, in which method:

- in step a), the first face of the measured lens (10) is surface profiled to acquire the three spatial coordinates (_1,_1,h1) of the points of the first set of measured points (Pm1) in a frame of reference associated with the first face of the measured lens (10); and

- in step b), at least one of the three spatial coordinates (_1',_1',h1') of the points of the first set of deduced points (Pd1) is deduced in a frame of reference associated with the first face of the deduced lens (20), from, on the one hand, at least two (_1,h1) of the three spatial coordinates (_1,_1,h1) of the points of the first set of measured points (Pm1) and, on the other hand, at least one surficial power of the first optical face of at least the deduced lens (20).

3.  Method according to the preceding claim, wherein the frame of reference associated with the first face of the measured lens (10) is homologous with the frame of reference associated with the first face of the deduced lens (20).

4.  Method according to one of Claims 2 and 3, wherein the deduction of step b) is carried out on the basis of the cylindrical and/or spherical surficial power of the first optical face of the deduced lens (20), with, in the case of a cylindrical power (C,C'), the orientation of the principal axis of the cylindrical power (a,a').

5.  Method according to one of Claims 2 to 4, wherein the deduction of step b) is carried out on the basis of the cylindrical and/or spherical surficial power of the first optical face of the measured lens (10), with, in the case of a cylindrical power (C,C'), the orientation of the principal axis of the cylindrical power (a,a'), the surficial powers and cylinder axis being deduced by surface profiling of the first optical face of the measured lens (10).

6.  Method according to one of Claims 2 to 5, including a step of acquiring at least one optical power of at least the deduced lens (20) and a step of deducing said at least one surficial power of the first optical face of the deduced lens (20) from at least said at least one optical power of the deduced lens (20).

7.  Method according to the preceding claim, including a step of acquiring an index (n) common to the two lenses (10,20) and a step of acquiring at least one surficial power of the second optical face of the deduced lens (20), and wherein said at least one surficial power of the first optical face of the deduced lens (20) is deduced from said at least one optical power of the deduced lens (20), from said at least one surficial power of the second optical face of the deduced lens (20) and from the index (n) of the deduced lens (20).

8.  Method according to Claim 6, including a step of acquiring an index (n) common to the two lenses (10,20) and wherein said at least one surficial power of the first optical face of the deduced lens (20) is deduced on the one hand from the difference between said at least one optical power of the deduced lens (20) and said at least one optical power of the measured lens (10), from their common index (n) and from said at least one surficial power of the first optical face of the measured lens (10).

9.  Method according to one of Claims 2 to 8, wherein, prior to step b), two of the three spatial coordinates (_1',_1',h1') of the points of the first set of deduced points (Pd1) are defined, namely a first coordinate (_1') and a second coordinate (_1'), and, in step b), the third coordinate (h1') of the points of the first set of deduced points (Pd1) is deduced.

10. Method according to the preceding claim, wherein said third coordinate (h1') of the points of the first set of deduced points (Pd1) is representative of the altitude of the points of the first set of deduced points (Pd1) along an axis (21) of the deduced lens (20), the two other coordinates (_1',_1') of the points of the first set of deduced points (Pd1) being representative of the position of the points of the first set of deduced points (Pd1) in a general plane (Pg') not containing said axis (21) of the deduced lens (20).

11. Method according to one of Claims 2 to 10, wherein, prior to step a), two of the three spatial coordinates (_1,_1,h1) of the points of the first set of measured points (Pm1) are defined, namely a first coordinate (_1) and a second coordinate (_1), and, in step a), the third coordinate (h1) of the points of the first set of measurement points (Pm1) is acquired by surface profiling.

12. Method according to the preceding claim, wherein said third coordinate (h1) of the points of the first set of measurement points (Pm1) is representative of the altitude of the points of the first set of measured points (Pm1) along an axis (11) of the measured lens, the two other coordinates (_1,_1) of the points of the first set of measured points (Pm1) being representative of the position of the points of the first set of measured points (Pm1) in a general plane (Pg) not containing said axis (11) of the measured lens (10).

13. Method according to Claims 10 and 12, wherein, the first faces of the two lenses (10,20) on the whole being spherical with a mean radius (R,R'), the two lenses having an optical centre (Co,Co'), the axis (11,21) of each of the two lenses (10,20) corresponding to the optical axis (11,21) that is defined as being the axis passing through the optical centre (Co,Co') and normal to the first optical face of the lens (10,20), the general plane (Pg,Pg') of each lens (10,20) being orthogonal to the optical axis and passing through the optical centre (Co,Co') of the lens (10,20), the measured lens (10) and the deduced lens (20) having a common index (n), the deduction, in step b), of the third coordinate (h1') of the points of the first set of deduced points (Pd1) of the first face of the deduced lens (20) is carried out by means of the formula:

$$h1' = h1 + (R\_-\_1\_)^{1/2} - (R'\_-\_1'\_)^{1/2},$$

h1' being the third coordinate of the first deduced point (Pd1) belonging to the first face of the deduced lens (20), h1 being the third coordinate of the first measured point (Pm1) belonging to the first face of the measured lens (10), _1' being the first coordinate of the first deduced point (Pd1), said. coordinate being defined as the distance between the optical axis (21) of the first optical face of the deduced lens (20) and the deduced point (Pd1), _1 being the first coordinate of the first measured point (Pm1), said coordinate being defined as the distance between the optical axis (11) of the first optical face of the measured lens (10) and the first measured point (Pm1), R being the mean radius of curvature of the first optical face of the measured lens (10), and R' being the mean radius of curvature of the first optical face of the deduced lens (20).

**14.** Method according to one of Claims 2 to 13 including the additional steps of:

- surface profiling the second face of the measured lens (10) in order to acquire the three spatial coordinates (_2,_2,h2) of the points of a second set of measured points (Pm2) facing the points of the first set of measured points (Pm1) in a frame of reference associated with the first face of the measured lens (10) ;
- deducing the measured thickness (E) between the points of the first set of measured points (Pm1) and the points of the second set of measured points (Pm2) of the measured lens (10);
- deducing the deduced thickness (E') of the deduced lens (20) between, on the one hand, the points of the first set of deduced points (Pd1) and, on the other hand, the points of a second set of deduced points (Pd2) located on the second face of the deduced lens (20) facing the points of the first set of deduced points (Pd1), from, at least, the measured thickness (E), the first and second spatial coordinates (_1,_1) of the points of the first set of measured points (Pm1), the index (n) of the two lenses (10,20) and at least one optical characteristic (S,S') of the two lenses (10,20).

**15.** Method according to the preceding claim, including a step of acquiring optical characteristics of the two lenses (10,20) including at least one spherical optical power (S,S') and/or cylindrical optical power (C,C') and/or prismatic optical power (Px,Px',Py,Py') with, in the case of a cylindrical power (C,C'), the orientation of the principal axis of the cylindrical power (C,C').

**16.** Method according to one of Claims 14 and 15, including a step of deducing spatial coordinates (_2',_2',h2') of the points of the second set of deduced points (Pd2), from, at least, the deduced thickness (E') between the points of the first set of deduced points (Pd1) and the points of the second set of deduced points (Pd2), and spatial coordinates (_1',_1',h1') of the points of the first set of deduced points (Pd1).

**17.** Method according to one of Claims 11 and 13, wherein, the two lenses (10,20) having an optical centre (Co,Co') and a horizon line (13,23) defining optical frames of reference, the points of the first set of measured points (Pm1) and of the first set of deduced points (Pd1) being points associated with the frame, the optical frames of reference of the two lenses (10,20) are located, the frame is positioned in said general plane (Pg,Pg') of each lens (10,20) so as to centre the lenses facing the pupillary point relative to the frame, and the first and second coordinates (_1,_1,_1',_1') of the points of the first set of measured points (Pm1) and of the first set of deduced homologous points (Pd1) are deduced.

**18.** Method according to one of Claims 2 to 17, wherein the two lenses (10,20) of the pair of spectacles being intended to be edged along an outline of known shape and position in projection on the general plane (Pg,Pg') of each of the two lenses (10,20),

- in step a), a first set of measured points (Pm1) is surface profiled on the first face of the measured lens (10) describing said outline in order to acquire the third coordinate (h1) of the points of the set of measured points (Pm1);

- in step b), the first and second coordinates (_1',_1') of the points of the first set of deduced points (Pd1) are deduced from at least one of the two first coordinates (_1,_1) of each point of the first set of homologous measured points (Pm1) and from the shape and position in projection on the general plane (Pg') of the outline of the deduced lens (20); and

- in step b), the third coordinate (h1') of each point of the first set of deduced points (Pd1) is deduced from the deduced lens (20).

**19.** Method according to the preceding claim, including the additional steps of:

- surface profiling the second optical face of the measured lens (10) in order to acquire the spatial coordinates (_2,_2,h2) of the points of a second set of measured points (Pm2) located facing the points of the first set of measured points (Pm1) of the first optical face of the measured lens (10);

- deducing the measured thickness (E) between each point of the first set of measured points (Pm1) and each facing point of the second set of measured points (Pm2) of the measured lens (10);

- deducing the deduced thickness (E') of the deduced lens (20) between each point of the first set of deduced points (Pd1) and each point of a second set of deduced points (Pd2) located facing the points of the first set of deduced points (Pd1) of the first optical face of the deduced lens (20), from, at least, the measured thickness (E), the first and second spatial coordinates (_1,_1,_1',_1') of the points of the first set of measured points (Pm1) and of the first set of deduced points (Pd1) and, at least, the spherical surficial power (S,S') of each of the two lenses (10,20).

**20.** Method according to one of Claims 18 and 19, wherein, the two lenses (10,20) having an optical centre (Co,Co') and a horizon line (13,23), the axis (11,21) of the lens corresponding to the optical axis (11,21), a vertical line (12,22) being defined as being the straight line perpendicular to the horizon line (13,23) and to the optical axis (11,21) of the first optical face of the lens (10,20), the deduction of the first and second coordinates (_1',_1') of each considered point of the first set of deduced points (Pd1) is carried out in such a way that each point of the first set of deduced points (Pd1) of the deduced lens (20) is located,

- on the one hand, in a half-plane which contains the optical axis (21) of the first optical face of the deduced lens (20), which starts from this optical axis (21) and which, if the two lenses (10,20) are superposed with their optical centres (Co,Co') and horizon lines (13,23) co-incident, is symmetric, about the vertical line (12,22), with the half plane containing that point of the first set of measured points (Pm1) which is homologous to the considered point and the optical axis (11) of the first optical face of the measured lens (10) and which starts from this optical axis (11); and

- on the other hand, at a distance (_1') from the optical axis (21) of the first optical face of the deduced lens (20) that depends, in the general plane (Pg') of the deduced lens (20), on the shape and position of the outline of the deduced lens (20) and of the half plane in which the considered point of the set of deduced points (Pd1) is located.

**21.** Method according to one of Claims 2 to 17, wherein the two lenses (10,20) of the pair of spectacles being intended to be drilled at anchoring points in order to fit them into a rimless frame and these anchoring points having first and second predefined coordinates in the general plane (Pg), the first set of measured points (Pm1) and the first set of deduced points (Pd1) consist in these anchoring points.

**22.** Method according to the preceding claim, wherein the first set of measured points (Pm1) and the first set of deduced points (Pd1) consist, for each anchoring point, in at least two distinct points located in proximity to this anchoring point on the first faces of the two lenses (10,20), and with which, depending on their spatial coordinates (_1,_1,h1,_1',_1',h1'), which are obtained by surface profilometry and deduction, respectively, the coordinates of the plane passing through the anchoring point and normal to the straight line passing through the two distinct points are calculated.

**23.** Method according to the preceding claim when dependent on Claim 14, wherein the deduced thickness (E') of the deduced lens (20) is calculated at each anchoring point.

**24.** Method according to one of the preceding claims, wherein in the deduction of step b), any cylindrical surficial powers of the faces in question of the two lenses (10,20) are taken into account.

**25.** Method according to Claim 1 applied to the acquisition of the thicknesses of two lenses (10,20) at two sets of homologous points (Pm1,Pd1), wherein:

- in step a), the two faces of the measured lens (10) are surface profiled to acquire the measured thickness (E) between a first set of measured points (Pm1) on a first face of the measured lens (10) and a second set of measured points (Pm2), which set is located on a second face of the measured lens (10), facing the first set of measured points (Pm1); and
- in step b), the deduced thickness (E') of the deduced lens (20), between a first set of deduced points (Pd1) on the first face of the deduced lens (20) and a second set of deduced points (Pd2) on the second face of the deduced lens (20), facing the first set of deduced points (Pd1), is deduced from, at least the measured thickness (E), the index (n) of the two lenses (10,20) and the difference of the optical powers of the two lenses (10,20).

**26.** Method according to the preceding claim, including a step of optical measurement of the two lenses (10,20) and a step of deducing optical powers of the two lenses (10,20), including at least one spherical optical power (S,S') and/or cylindrical optical power (C,C') and/or prismatic optical power (Px,Px',Py,Py') with, in the case of a cylindrical power (C, C'), the orientation of the principal axis of the cylindrical power (C,C').

**27.** Device for implementing the method according to one of the preceding claims, comprising measuring means able to locate the optical frames of reference of the two lenses (10,20), means for surface profiling the measured lens (10), means for acquiring optical powers of the two lenses (10,20), and an electronic and/or computational system designed to execute the deductions of step b).

Fig.1a

Fig.1b

EP 1 882 207 B1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4596091 A
- EP 1155283 A
- FR 2543039

**Littérature non-brevet citée dans la description**

- Theoritical aspects of concentric varifocal lenses. **DE W.N. CHARMAN.** Ophtal. Physiol. Opt. Pergamon Press, 1982, vol. 2, 75-86
- Paraxial Optics. **W.F. LONG.** Visual Optics and Instrumentation. Macmillan Press, 1991, 418-419